# EUROPEAN PATENT SPECIFICATION

(11) **EP 1 984 638 B1**
(45) Date of publication and mention of the grant of the patent: **31.08.2016**
(21) Application number: 07713913.7
(22) Date of filing: 01.02.2007
(51) Int. Cl.: F16C 33/10, F16C 33/12, F16C 33/14

(54) **SLIDING MEMBER AND METHOD FOR MANUFACTURING THE SAME**
SCHIEBEGLIED UND HERSTELLUNGSVERFAHREN DAFÜR
ÉLÉMENT COULISSANT ET PROCÉDÉ DE FABRICATION DE CELUI-CI

(30) Priority: 06.02.2006 JP 2006028145
(43) Date of publication of application: 29.10.2008
(73) Proprietor: Panasonic Corporation, Kadoma-shi Osaka 571-8501 (JP)
(72) Inventor: ISHIDA, Yoshinori,c/o Matsushita El. In. Co. Ltd., 2-1-61 Shiromi, Chuo-ku Osaka 540-6207 (JP); USAMI, Hatsuhiko, Aichi 458-0003 (JP)
(74) Representative: Eisenführ Speiser
(86) International application number: PCT/JP2007/052161
(87) International publication number: WO 2007/091617

(56) References cited:
- EP-B1- 0 204 339
- DE-A1- 4 125 165
- GB-A- 1 410 673
- US-A- 3 055 769
- US-A- 4 123 122
- US-A- 5 433 531
- US-B1- 6 176 619

## Description

### Technical Field

The present invention relates to sliding members used for sliding portions that come into contact and slide with each other when various industrial equipments, such as compressors for refrigerator-freezers, machine tools, and internal-combustion engines for automobiles, are driven, and to methods for manufacturing such sliding members.

### Background Art

In recent years, surface modification techniques for sliding portions in various industrious equipments have been strongly desired to satisfy various driving requirements so as to drive such equipments at higher power and lower revolution.

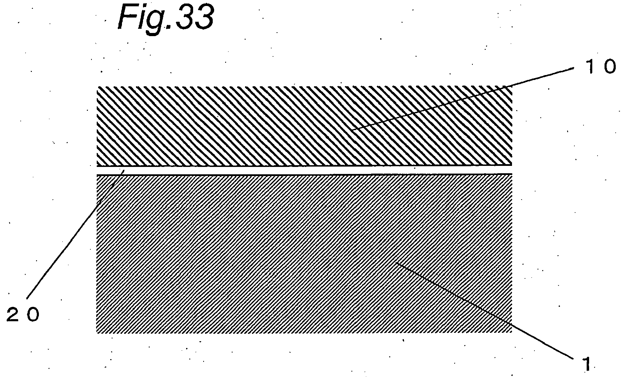

Fig. 33 is a cross-sectional view of conventional sliding members used for a sliding portion. In Fig. 33, a first sliding member 1 and an opposing second sliding member 10 are members that slide with each other, as typified by a crankshaft and a piston pin of a compressor for a refrigerator-freezer, for example. Provided between the first and second sliding members 1 and 10 is a contact sliding portion 20, to which lubricating oil with lubricating and cooling functions is supplied.

The conventional sliding members, i.e., the first and second sliding members 1 and 10, are formed by an iron-based material and/or an aluminum-based material, consisting mainly of iron and/or aluminum that are/is easily worked and relatively inexpensive.

If both sliding faces of the first sliding member 1 and the opposing second sliding member 10 are microscopically viewed, surface roughness or undulation is observed in each surface. It is known that, in the actuality of sliding at the contact sliding portion 20, a metal contact portion formed by inequalities of the sliding faces, and an oil film portion formed by lubricating oil between the sliding members, support each other, thus providing a so-called mixed lubrication region where a boundary lubrication region and a fluid lubrication region coexist.

At a revolution of 1500 rpm to 3000 rpm, which is typically employed in a compressor for a refrigerator-freezer', the thickness of the oil film in the contact sliding portion 20 is calculated at the order of 1 *µ*m to 2 *µ* m, or at 1 *µ* m or less. In the conventional sliding members, the inequalities of the sliding faces have been decreased, and the sliding faces of the first and second sliding members 1 and 10 have been smoothed, thus suppressing the wear due to the sliding at the contact sliding portion 20, and reducing frictional loss. Such a conventional technology is disclosed in Japanese Unexamined Patent Publication NO. 2000-145637.

Therefore, in the conventional sliding members, the sliding faces of the first and second sliding members 1 and 10 have both been ground to a surface roughness of about Ra 0.3 *µ* m to Ra 0.6 *µ* m, and then been finished to a surface roughness of Ra 0.2 *µ* m or less by lapping, honing or the like. As a result, the surface roughness or undulation has substantially been eliminated from both of the sliding faces of the first and second sliding members 1 and 10.

In the above-described conventional technology, however, with a compressor for a refrigerator-freezer being driven at higher power and lower revolution, the actuality of sliding becomes more and more severe, which breaks the oil film at the contact sliding portion 20 between the first and second sliding members 1 and 10, thus causing the sliding at the boundary lubrication region consisting mainly of the metal contact portion of the sliding members. If such a sliding is continued for a long period of time, sliding heat generation due to excessive metal contact becomes pronounced, and therefore, adhesive wear and/or abrasive wear might proceed at the contact sliding portion 20. As a result, the roughness of the contact sliding faces is accelerated, and finally, the lock due to seizing and/or abnormal wear might be caused.

Prior art sliding members having transfer layers or the like comprising alumina, silica, mullite, calcium oxide, magnesium oxide and/or iron oxide are described in for instance US 6 176 619, EP 0 204 339 and GB 1 410 673.

### Disclosure of Invention

The present invention has been made to solve the problems in the above-described conventional technology, and its object is to provide a highly reliable sliding member by reducing wear even in the situation where an oil film thickness is relatively thin, i.e., even at a boundary lubrication region.

To achieve this object, a sliding member according to claim 1 and a manufacturing method according to claim 10 are provided.

The sliding member according to the invention comprises a transfer layer, which is formed at a sliding face of the sliding member by projecting, onto a base material of the sliding member, projection particles containing at least one component selected from the group consisting of alumina, silica, mullite, calcium oxide, magnesium oxide and iron oxide and causing a component of each projection particle to be adhered and interfused to the surface of the base material, and wherein, due to an impact force, a large number of minute cavities are formed, each formed by a part of a substantially spherical surface, which are provided at the sliding face of the sliding member, and wherein a minute groove is formed at the sliding face of the sliding member.

The sliding member manufacturing method according to the invention comprises the step of forming the transfer layer by projecting, onto a base material of the sliding member, projection particles containing at least one component selected from the group consisting of alumina, silica, mullite, calcium oxide, magnesium oxide and iron oxide and causing a component of each projection particle to be adhered and interfused to the surface of the base material, wherein, in the step of forming the transfer layer, a large number of minute cavities, each formed by a part of a substantially spherical surface, are provided at the sliding face of the sliding member.

The sliding member formed in this manner can provide the sliding face with at least one or more of the following properties of the component(s) of the transfer layer: mechanical strength, solid lubrication, fracture toughness, and sliding property. Therefore, the wear resistance and seizing resistance of the sliding face of the sliding member are improved, and the wear at a boundary lubrication region is considerably reduced.

A sliding member according to the present invention is based on the aspect, wherein a large number of minute cavities, each formed by a concave face, are provided at the sliding face of the sliding member. The sliding member according to the second aspect, formed in this manner, allows each minute cavity to function as an oil receiver. Thus, even in the situation where the supply of lubricating oil from outside is interrupted, the lubricating oil at a contact sliding portion is retained to enable a reduction in the wear, thereby making it possible to provide a highly reliable sliding member.

The maximum diameter of each minute cavity at a sliding face opening is preferably in the range between 10 *µ* m and 200 *µ* m. If the maximum diameter of each minute cavity is more than 200 *µ* m, the minute cavities are connected together and the lubricating oil retained therein becomes more likely to flow out. On the other hand, if the maximum diameter of each minute cavity is less than 10 *µ* m, a substantial difference in the retention of the lubricating oil from a smooth surface is reduced. However, the sliding member according to the fourth aspect is provided to avoid such problems. Thus, by setting the maximum diameter of each minute cavity at an appropriate value within the above range, the wear can be reduced even at a boundary lubrication region, thereby making it possible to provide a highly reliable sliding member.

The base material of the sliding member can preferably be made of an aluminum-based material. Thus, even if a material used widely as a sliding member, such as an aluminum die-casting product or an aluminum alloy casting, is employed, the sliding member according to the fifth aspect can reduce the wear at a boundary lubrication region, thereby making it possible to provide a highly reliable sliding member.

The base material of the sliding member can also be made of an iron-based material. Thus, even if a material used widely as a sliding member, such as a cast iron, a sintered iron or a mild steel, is employed, the sliding member according to the sixth aspect can reduce the wear at a boundary lubrication region, thereby making it possible to provide a highly reliable sliding member.

According to the present invention, a minute groove is formed at the sliding face of the sliding member. The sliding member according to this aspect allows the minute groove to function as an oil receiver. Thus, even in the situation where the supply of lubricating oil from outside is interrupted, the lubricating oil between the sliding members is retained to enable a reduction in the wear, thereby making it possible to provide a highly reliable sliding member.

The minute groove preferably extends in a direction that forms a predetermined angle with respect to a sliding direction. The sliding member according to this aspect allows the minute groove to efficiently function as an oil receiver. Thus, even in the situation where the supply of lubricating oil from outside is interrupted, the lubricating oil between the sliding members is retained to enable a reduction in the wear, thereby making it possible to provide a highly reliable sliding member.

The minute groove can also extend in a direction in parallel with a sliding direction. The sliding member according to this aspect allows the minute groove to efficiently function as an oil receiver. Thus, even in the situation where the supply of lubricating oil from outside is interrupted, the lubricating oil between the sliding members is retained to enable a reduction in the wear, thereby making it possible to provide a highly reliable sliding member.

The minute groove can also extend in mutually perpendicular directions. The sliding member according to this aspect allows the minute groove to efficiently function as an oil receiver. Thus, even in the situation where the supply of lubricating oil from outside is interrupted, the lubricating oil between the sliding members is retained to enable a reduction in the wear, thereby making it possible to provide a highly reliable sliding member.

The ratio between, the width of the minute groove and the length of the sliding face along a direction perpendicular to an extending direction of the minute groove is preferably in the range between 0.05 and 0.6. In the sliding member according to this aspect, the ratio of the minute groove at the sliding face is set at an appropriate value, thereby allowing the minute groove to efficiently function as an oil receiver.

An extremely minute concave having a maximum diameter of 3 *µ* m or less is preferably formed at an inner face of each minute cavity. The sliding member according to this aspect, formed in this manner, allows the extremely minute concave to serve as a wedge between the sliding face and lubricating oil. Thus, since the retention and absorption of the lubricating oil in the minute cavities are improved, the wear is reduced even at a boundary lubrication region, thereby making it possible to provide a highly reliable sliding member.

In the sliding member manufacturing method according to the invention, due to application of an impact load resulting from the projection of the projection particle, the surface temperatures of the sliding member and the projection particle are increased to activate both of the surfaces, thereby making it possible to efficiently transfer the component(s) of the projection particle onto the sliding face. Furthermore, in the sliding member manufacturing method according to the invention, due to an impact force, a large number of minute cavities are formed at the sliding face, and the refinement of surface composition of the sliding face is caused to increase the internal stress. Thus, properties such as high hardness and high fracture toughness are provided, thereby making it possible to fabricate a highly reliable and highly productive sliding member.

In a preferred sliding member manufacturing method, the projection particle is substantially spherically shaped and has an average particle diameter in the range between 3 *µ* m and 200 *µ* m. If the average particle diameter is more than 200 *µ* m, the opening diameter of each minute cavity formed at the sliding face of the sliding member becomes excessively large, so that the minute cavities are connected together and the lubricating oil retained therein becomes more likely to flow out. On the other hand, if the average particle diameter is less than 3 *µ* m, the diameter of each minute cavity becomes excessively small, so that a substantial difference in the retention of the lubricating oil from a smooth surface is reduced. To avoid such problems, each minute cavity is formed into an appropriate shape and the sliding face opening diameter is set at an appropriate value for the retention of the lubricating oil. Thus, the sliding member manufacturing method can fabricate a highly reliable sliding member.

In a preferred sliding member manufacturing method, fly ash is used as the projection particle. The fly ash contains 70% to 80% of alumina, silica and mullite components, and 20% to 30% of calcium oxide, magnesium oxide and iron oxide components. Therefore, by projecting the fly ash onto the sliding face of the sliding member, at least two or more components of these compounds are simultaneously transferred onto the sliding face, and thus the sliding face of the sliding member can be simultaneously provided with at least two or more of the following excellent properties: a high mechanical strength, a hard solid lubrication layer, a high fracture toughness, and a high sliding property. Consequently, the sliding member manufacturing method according to the eighteenth aspect can fabricate an efficient and highly reliable sliding member.

A preferred sliding member manufacturing method further includes, prior to the step of forming the transfer layer, a grinding step for forming a minute groove at a face of the base material which is to be the sliding face.

The minute groove is formed at the sliding face of the sliding member, thereby making it possible to fabricate a sliding member in which the minute groove functions as an oil receiver.

Another preferred sliding member manufacturing method further includes, prior to the step of forming the transfert layer, a grinding step for forming a minute groove at a face of the base material which is to be the sliding face, and the minute groove formed in the grinding step extends in a direction that forms a predetermined angle with respect to a sliding direction. A desired minute groove can be formed at the sliding face of the sliding member. As a result, the minute groove is allowed to efficiently function as an oil receiver, and therefore, even in the situation where the supply of lubricating oil from outside is interrupted, the lubricating oil between the sliding members is retained to enable a reduction in the wear, thereby making it possible to fabricate a highly reliable sliding member.

In a preferred a sliding member manufacturing method, in the step of forming the transfer layer, a minute cavity, whose maximum diameter at a sliding face opening is in the range between 10 *µ* m and 200 *µ* m, is formed. If the maximum diameter of each minute cavity is more than 200 *µ* m, the minute cavities are connected together, and the lubricating oil retained therein becomes more likely to flow out. On the other hand, if the maximum diameter of each minute cavity is less than 10 *µ* m, a substantial difference in the retention of the lubricating oil from a smooth surface is reduced. However, the sliding member manufacturing method according to this aspect can avoid such problems. Thus, by setting the maximum diameter of each minute cavity at an appropriate value within the above range, the wear can be reduced even at a boundary lubrication region, thereby making it possible to fabricate a highly reliable sliding member.

In a preferred sliding member manufacturing method, in the step of forming the transfer layer, an extremely minute concave having a maximum diameter of 3 *µ* m or less is formed at an inner face of a minute cavity. In the sliding member manufacturing method according to this aspect, the extremely minute concave is allowed to serve as a wedge between the sliding face and lubricating oil. Thus, since the retention and absorption of the lubricating oil in the minute cavities are improved, the wear is reduced even at a boundary lubrication region, thereby making it possible to fabricate a highly reliable sliding member.

In a preferred sliding member manufacturing method, the transfer layer is formed by projecting, onto the base material, a mixed projection particle in which the projection particle having a particle diameter of 1 *µ* m or less is mixed with a carrier bead having a substantially spherical shape and having an average particle diameter in the range between 3 *µ* m and 200 *µ* m. In the sliding member manufacturing method according to this aspect, due to an impact energy generated at the time of collision of the carrier bead having a relatively large particle diameter, a minute cavity having an appropriate diameter within the above range is formed for the retention of lubricating oil at the sliding face, thus enabling the transfer of the component of the projection particle having a small particle diameter. As a result, the sliding member manufacturing method can fabricate a highly reliable and highly productive sliding member.

In a further preferred sliding member manufacturing method, the mixed projection particle is formed in such a manner that a large number of the projection particles are attached to a surface of the carrier bead. In the sliding member manufacturing method according to this aspect, at the time of collision of the carrier bead, an impact energy is generated, and in addition, each projection particle is pushed into the sliding face by the carrier bead, thus facilitating the transfer of the component of each projection particle onto the base material. Furthermore, in the sliding member manufacturing method according to this aspect, a minute cavity and an extremely minute concave can be effectively formed, thus making it possible to fabricate a highly reliable and highly productive sliding member.

In a preferred sliding member manufacturing method, at at least one of calcium oxide and calcium lime is used as the projection particle. In the sliding member manufacturing method according to this aspect including such a step, since the transfer layer composed mainly of calcium oxide is formed to a thickness of a few *µ* m onto the sliding face, the wear reduction is significantly achieved at a boundary lubrication region, thus making it possible to fabricate a highly reliable sliding member.

A sliding member according to the present invention and a manufacturing method thereof can achieve the advantageous effect of remarkably reducing the wear even in the situation where an oil film thickness at a contact sliding portion is relatively thin, i.e., even at a boundary lubrication region, thus making it possible to provide a highly reliable sliding member.

### Brief Description of Drawings

Fig. 1 shows an enlarged schematic cross-sectional view of a sliding member in Embodiment 1 according to the present invention;
Fig. 2 shows a schematic view illustrating a method for manufacturing the sliding member of Embodiment 1 according to the present invention;
Fig. 3 shows characteristic graphs indicating results of EPMA elemental analysis on a sliding face of the sliding member of Embodiment 1 according to the present invention;
Fig. 4 shows characteristic graphs indicating results of X-ray diffraction analysis on the sliding face of the sliding member of Embodiment 1 according to the present invention;
Fig. 5 shows a characteristic graph indicating changes in friction coefficient with time in Condition 1 of Embodiment 1 according to the present invention, and in Comparative Example 1;
Fig. 6 shows a characteristic graph indicating sliding lengths until the occurrence of seizing in Conditions 1 to 5 of Embodiment 1 according to the present invention, and in Comparative Example 1;
Fig. 7 shows a characteristic graph indicating results of comparison made between specific wear rates in Conditions 1 to 5 of Embodiment 1 according to the present invention, and in Comparative Example 1;
Fig. 8 shows a characteristic graph indicating correlations among minute cavity diameters, sliding lengths and specific wear rates in Conditions 1 to 5 of Embodiment 1 according to the present invention and in Comparative Example 1, in the case where projection particles are each formed into an approximately spherical shape;
Fig. 9 shows a characteristic graph indicating correlations among particle diameters, sliding lengths and specific wear rates in Conditions 1 to 5 of Embodiment 1 according to the present invention and in Comparative Example 1, in the case where projection particles are each formed into an approximately spherical shape;
Fig. 10 shows an enlarged schematic cross-sectional view of a sliding member in Embodiment 2 according to the present invention;
Fig. 11 shows a schematic view illustrating a method for manufacturing the sliding member of Embodiment 2 according to the present invention;
Fig. 12 shows characteristic graphs indicating results of EPMA elemental analysis on a sliding face of the sliding member of Embodiment 2 according to the present invention;
Fig. 13 shows characteristic graphs indicating results of X-ray diffraction analysis on the s.liding face of the sliding member of Embodiment 2 according to the present invention;
Fig. 14 shows characteristic graphs indicating changes in friction coefficient with time in Embodiment 2 according to the present invention;
Fig. 15 shows a characteristic graph indicating sliding length until the occurrence of seizing in Embodiment 2 according to the present invention;
Fig. 16 shows a characteristic graph indicating specific wear rate in Embodiment 2 according to the present invention;
Fig. 17 shows an enlarged schematic cross-sectional view of a sliding member in Embodiment 3 according to the present invention;
Fig. 18 shows a schematic view illustrating a method for manufacturing the sliding member of Embodiment 3 according to the present invention;
Fig. 19 shows a diagram illustrating minute cavities and minute grooves in Embodiment 3 according to the present invention;
Fig. 20 shows characteristic graphs indicating results of EPMA elemental analysis on a sliding face of the sliding member of Embodiment 3 according to the present invention;
Fig. 21 shows characteristic graphs indicating results of X-ray diffraction analysis on the sliding face of the sliding member of Embodiment 3 according to the present invention;
Fig. 22 shows a characteristic graph indicating changes in friction coefficient with time in Embodiment 3 according to the present invention;
Fig. 23 shows a characteristic graph indicating sliding length until the occurrence of seizing in Embodiment 3 according to the present invention;
Fig. 24 shows a characteristic graph indicating specific wear rate in Embodiment 3 according to the present invention;
Fig. 25 shows an enlarged schematic cross-sectional view of a sliding member in Embodiment 4 according to the present invention;
Fig. 26 shows a schematic view illustrating a method for manufacturing the sliding member in Embodiment 4 according to the present invention;
Fig. 27 shows a schematic view illustrating a mixed projection particle in Embodiment 4 according to the present invention;
Fig. 28 shows characteristic graphs indicating results of EPMA elemental analysis on a sliding face of the sliding member of Embodiment 4 according to the present invention;
Fig. 29 shows characteristic graphs indicating results of X-ray diffraction analysis on the sliding face of the sliding member of Embodiment 4 according to the present invention;
Fig. 30 shows a characteristic graph indicating changes in friction coefficient with time in Embodiment 4 according to the present invention;
Fig. 31 shows a characteristic graph indicating sliding length until' the occurrence of seizing in Embodiment 4 according to the present invention;
Fig. 32 shows a characteristic graph indicating disk-side specific wear rate in Embodiment 4 according to the present invention; and
Fig. 33 is a cross-sectional view of a conventional sliding member.

### Best Mode for Carrying Out the Invention

### Embodiment 1

Hereinafter, a sliding member of Embodiment 1, which is a preferred embodiment of the present invention, will be described with reference to the appended drawings. It should be noted that since the embodiments described below are each illustrated as a specific example of an inventive sliding member, the designs of these embodiments are not intended to limit the present invention.

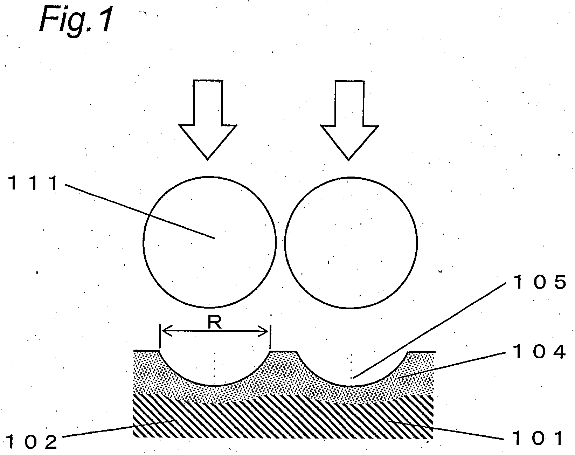

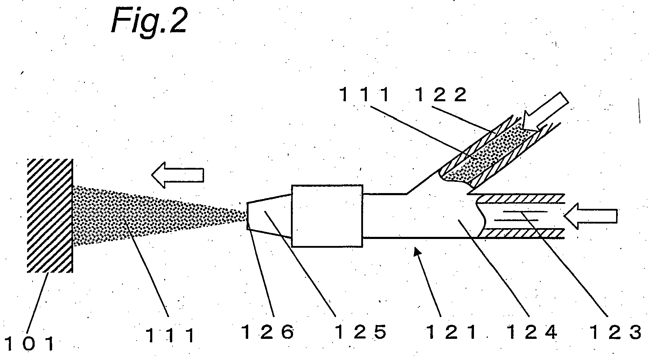

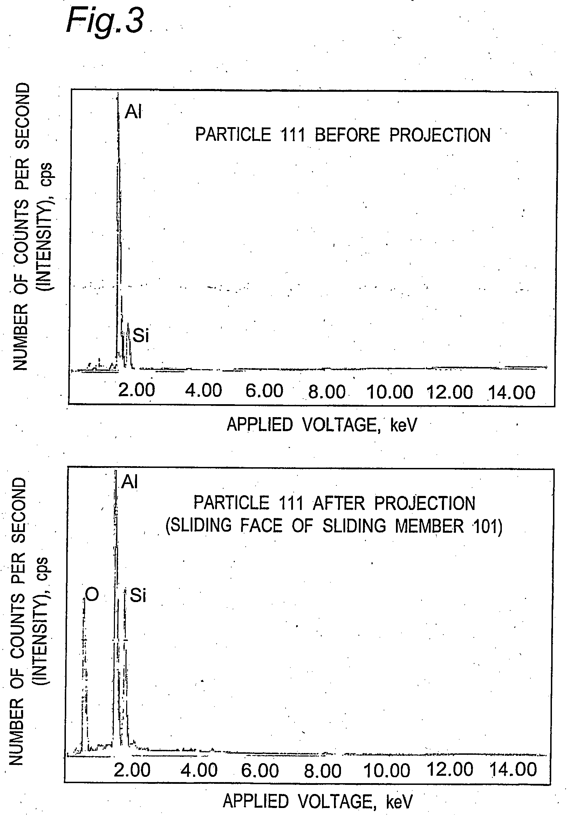

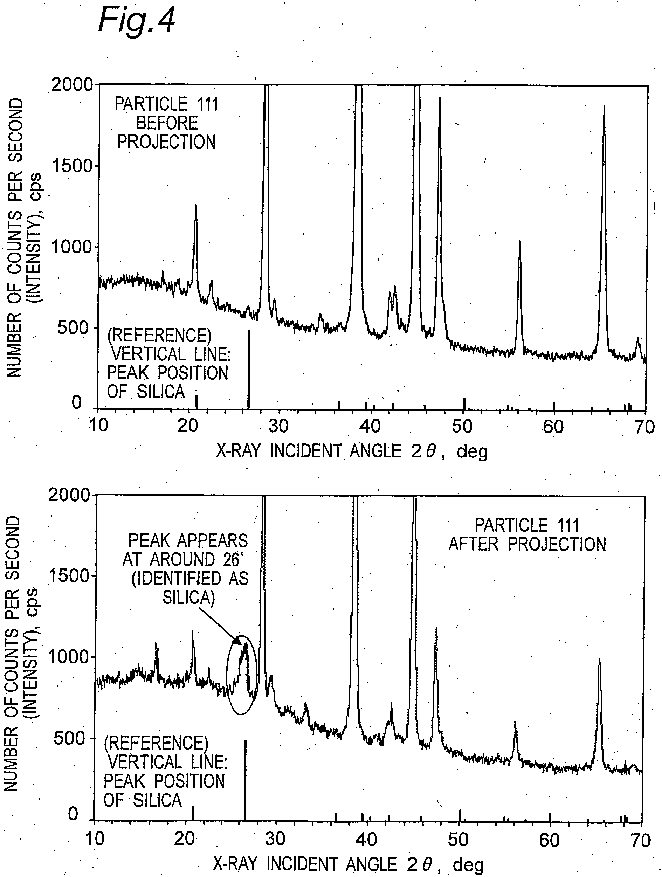

Fig. 1 shows an enlarged schematic cross-sectional view partially illustrating a sliding member in Embodiment 1 according to the present invention. Fig. 2 shows a schematic view illustrating a method for manufacturing the sliding member of Embodiment 1. Fig. 3 shows characteristic graphs indicating results of EPMA elemental analysis on a sliding face of the sliding member of Embodiment 1. And Fig. 4 shows characteristic graphs indicating results of X-ray diffraction analysis on the sliding face of the sliding member of Embodiment 1.

A sliding member 101 of Embodiment 1 according to the present invention will be described below.

The sliding member 101 is formed using, as a base material 102, an aluminum alloy (JIS: A6063) made of an aluminum-based material.

At a sliding face of the sliding member 101, a transfer layer 104, in which silica (SiO₂) is transferred to have a thickness of a few *µ* m, is formed. As used herein, the term "transfer" means a process of causing a component of each projection particle 111 to be adhered and interfused to a surface of the base material 102 and the vicinity of the surface. In this embodiment, the transfer is realized by projecting the projection particles 111, having components which are desired to be transferred, onto the sliding face of the sliding member 101 at a predetermined velocity.

In addition, a large number of extremely minute cavities 105, each formed into an approximately hemispherical surface, i.e., each formed by a part of an approximately spherical surface, are further provided at the sliding face.
Next, a method for manufacturing the sliding member 101 of Embodiment 1 will be described in detail.

First, the surface of the base material 102, which is to be the sliding face of the sliding member 101, is ground so as to be finished to a surface roughness of about Ra 0.3 *µ* m. Then, a projection particle supply device 121 (see Fig. 2) is used to project the projection particles 111 onto the surface of the base material 102.

In the projection particle supply device 121, a projection particle transport pipe 122 transporting the projection particles 111 stored in a storage tank (not shown), is connected with a gas-pipe 124 flowing a carrier gas 123, and a nozzle 125 is disposed at a tip of the gas pipe 124.

In Embodiment 1, approximately spherically shaped particles, each made of silica (SiO₂) having a high purity of 99% or more, are used as the projection particles 111. The average particle diameter of the projection particles 111 is 20 *µ* m, and there is shown a normal distribution in which the projection particles 111, each having a particle diameter ranging from 10 *µ* m to 30 *µ* m, occupy 90% or more of the entire projection particles 111.

The .projection particles 111, stored in the storage tank, are allowed to pass through the projection particle transport pipe 122 by means of an electric gear pump (not shown), and are transported to a connection between the projection particle transport pipe 122 and the gas pipe 124. The carrier gas 123 inside the gas pipe 124 is a dry air provided by utilizing an air pump (not shown), and the gas pressure is adjusted so as to be in the range between 0.3 MPa and 0.6 MPa.

The projection particles 111, continuously transported to the connection between the projection particle transport pipe 122 and the gas pipe 124 in this manner, are projected approximately perpendicularly to the' sliding face of the sliding member 101 through a tip outlet 126 of the nozzle 125 at a velocity of about 100 m/s by means of the carrier gas 123. It should be noted that the distance between the tip outlet 126 of the nozzle 125 and the sliding face of the sliding member 101 is in the range between 30 mm and 40 mm.

In the above-described manufacturing process steps, the diameter R of each extremely minute cavity 105 (i.e., sliding face opening diameter), formed at the sliding face of the sliding member 101, is about 40 *µ* m at the most from shape measurement results. As used herein, "sliding face opening diameter" means the diameter of an approximately circular opening at a flat sliding face.

Furthermore, the sliding member 101 of Embodiment 1 fabricated as described above will be described in more detail with reference to Figs. 3 and 4.

Fig. 3 shows graphs indicating comparison results of analysis on the sliding face of the sliding member 101 before and after the projection of the projection particles 111, which are obtained by utilizing an EPMA analyzer. In each graph shown in Fig. 3, the horizontal axis represents an applied voltage [keV], while the vertical axis represents the number of counts per second (intensity) [cps]. It should be noted that the analytical results shown in Fig. 3 are obtained under the analytical condition in which the applied voltage is 15 keV at the most, and there is shown information about elements existing at a depth of about 2 *µ* m from the surface. From these results, it can be seen that the peaks of silicon (Si) and oxygen (O), which are constituent elements of the projection particles 111, after the projection are significantly higher than those of silicon (Si) and oxygen (O) before the projection.

Fig. 4 shows graphs indicating comparison results of analysis on the sliding face of the sliding member 101 before and after the projection of the projection particles 111, which are obtained by utilizing an X-ray diffraction analyzer. In each graph shown in Fig. 4, the horizontal axis represents an X-ray incident angle (diffraction angle 2θ) [deg], while the vertical axis represents the number of counts per second (intensity) [cps]. It should be noted that the analytical results shown in Fig. 4 are obtained by carrying out a thin film X-ray diffraction method, and there is shown information about a compositional structure at a depth of about 5 *µ* m from the surface. A plurality of vertical solid lines, starting from the horizontal axis at the bottom of each of the upper and lower graphs in Fig. 4, each denote the peak position of silica (SiO₂). From these results, it can be seen that the peak at a diffraction angle 2θ of around 26°, i.e., the peak of silica (Si02), appears after the projection.

From the results shown in Figs. 3 and 4, it is possible to determine that the transfer layer 104, in which a component of each projection particle 111, i.e., silica (SiO₂), has been transferred, is formed at the sliding face of the sliding member 101. Although not shown, the results of the X-ray diffraction analysis, conducted on the compositional structure at a depth of 10 *µ* m or more from the surface, indicate that the peak of silica (SiO₂) becomes extremely low. Therefore, the thickness of the transfer layer 104, containing a large amount of silica (SiO₂), is estimated to be about a few *µ* m.

The frictional wear properties of the sliding member 101, formed by the above-described manufacturing process steps, are evaluated by utilizing a ball-on-disk tester. The test is carried out in the following manner : a stainless steel (SUS304) ball, made of an iron-based material and having a spherical diameter of 9.5 mm and a surface roughness of Ra 0.2 or less, is used as a sliding member (not shown) to be opposed to the sliding member 101; turbine oil is used as lubricating oil; and the test is performed in an atmosphere at a temperature of 22°C to 28°C and at a relative humidity of 55% to 65%. The test condition includes a vertical load of 19.6 N and a sliding velocity of 0.1 m/s. It should be noted that only 0.05 mL of the lubricating oil is dropped before the test, and the lubricating oil is consumed in accordance with an increase in sliding length (sliding distance). In the middle of the test, wear proceeds at a contact sliding portion, and at the point in time when the friction coefficient has reached 0.3 or more, it is determined that the lubricating oil has been depleted and seizing has occurred, thus bringing the test to an end. The above-described condition is defined as Condition 1 of Embodiment 1.

Furthermore, in order to evaluate the frictional wear properties concerning the sliding members of Embodiment 1 according to the present invention, other specifications, in which the shapes and sizes of the projection particles are changed, are also shown in Table 1 below along with the specification of Condition 1 of Embodiment 1. Also in any of the other specifications, an aluminum alloy (A6063) made of an aluminum-based material is used as the base material 102, and a stainless steel (SUS304) ball, made of an iron-based material and having the similar spherical diameter and surface roughness, is used as the opposing sliding member.

**Table.1**

| | | EMBODIMENT 1 CONDITION 1 | EMBODIMENT 1 CONDITION 2 | EMBODIMENT 1 CONDITION 3 | EMBODIMENT 1 CONDITION 4 | EMBODIMENT 1 CONDITION 5 | COMPARATIVE EXAMPLE 1 |
|---|---|---|---|---|---|---|---|
| | BASE MATERIAL | ALUMINUM DIE-CAST | ALUMINUM DIE-CAST | ALUMINUM DIE-CAST | ALUMINUM DIE-CAST | ALUMINUM DIE-CAST | ALUMINUM DIE-CAST |
| | PROCESS | PROJECTION OF PROJECTION PARTICLE | PROJECTION OF PROJECTION PARTICLE | PROJECTION OF PROJECTION PARTICLE | PROJECTION OF PROJECTION PARTICLE | PROJECTION OF PROJECTION PARTICLE | LAPPING (Ra0.2) |
| | PARTICLE | SILICA | SILICA | SILICA | SILICA | SILICA | - |
| | COMPONENT | SiO₂ | SiO₂ | SiO₂ | Si02 | Si02 | - |
| | PARTICLE DIAMETER [*µ* m] | 20 | 7 | 60 | 200 | 100 | - |
| | SHAPE | SPHERICAL | SPHERICAL | SPHERICAL | SPHERICAL | ANGULAR | - |
| | SURFACE STATE AFTER PROCESS | TRANSFER LAYER MINUTE CAVITY | TRANSFER LAYER MINUTE CAVITY | TRANSFER LAYER MINUTE CAVITY | TRANSFER LAYER MINUTE CAVITY | TRANSFER LAYER MINUTE STRIATION | - |
| | PARTICLE COMPONENT RATIO IN TRANSFER LAYER (WHICH IS 1 IN CONDITION 1 OF EMBODIMENT 1) | 1 | 1 | 1 | 1 | 1 OR LESS | - |
| | MAXIMUM CAVITY DIAMETER [*µ* m] | ∼40 | ∼20 | ∼80 | ∼200 | - | - |

In Condition 2 of Embodiment 1, a sliding face of a sliding member is ground to have a surface roughness of Ra 0.3 *µ* m, and then projection particles are projected onto the sliding face of the sliding member. As the projection particles, approximately spherically shaped projection particles, each containing 99% or more of silica (SiO₂) component, are used. It should be noted that the average particle diameter of the projection particles is 7 *µ* m, and there is shown a normal distribution in which the projection particles, each having a particle diameter ranging from 3 *µ* m to 16 *µ* m, occupy 90% or more of the entire projection particles. At the sliding face of the sliding member, a transfer layer in which the component of each projection particle is transferred, and minute cavities, each formed into an approximately hemispherical surface, are provided. Although the component ratio detected from the transfer layer' is substantially similar to that in Condition 1 of Embodiment 1 described above, the diameter R of each minute cavity (i.e., sliding face opening diameter) is about 20 *µ* m at the most, which is smaller than that of each minute cavity in Condition 1 of Embodiment 1.

In Condition 3 of Embodiment 1, a sliding face of a sliding member is ground to have a surface roughness of Ra 0.3 *µ* m, and then projection particles are projected onto the sliding face of the sliding member. As the projection particles, approximately spherically shaped projection particles, each containing 99% or more of silica (SiO₂) component, are used. It should be noted that the average particle diameter of the projection particles is 60 *µ* m, and there is shown a normal distribution in which the projection particles, each having a particle diameter ranging from 40 *µ* m to 70 *µ* m, occupy 90% or more of the entire projection particles. At the sliding face of the sliding member, a transfer layer in which the component of each projection particle is transferred, and minute cavities, each formed into an approximately hemispherical surface, are provided. Although the component ratio detected from the transfer layer is substantially similar to that in Condition 1 of Embodiment 1 described above, the diameter R of each minute cavity (i.e., sliding face opening diameter) is about 80 *µ* m at the most, which is larger than that of each minute cavity in Condition 1 of Embodiment 1.

In Condition 4 of Embodiment 1, a sliding face of a sliding member is ground to have a surface roughness of Ra 0.3 *µ* m, and then projection particles are projected onto the sliding face of the sliding member. As the projection particles, approximately spherically shaped projection particles, each containing 99% or more of silica (SiO₂) component, are used. It should be noted that the average particle diameter of the projection particles is 200 *µ* m, and there is shown a normal distribution in which the projection particles, each having a particle diameter ranging from 180 *µ* m to 220 *µ* m, occupy 90% or more of the entire projection particles. At the sliding face of the sliding member, a transfer layer in which the component of each projection particle is transferred, and minute cavities, each formed into an approximately hemispherical surface,' are provided. Although the component ratio detected from the transfer layer is substantially similar to that in Condition 1 of Embodiment 1, the diameter R of each minute cavity (i.e., sliding face opening diameter) is about 200 *µ* m at the most. In Condition 4 of Embodiment 1, a large number of regions where the minute cavities' are connected together are confirmed.

In Condition 5 of Embodiment 1 which is not according to the invention, a sliding face of a sliding member is ground to have a surface roughness of Ra 0.3 *µ* m, and then projection particles are projected onto the sliding face of the sliding member. As the projection particles, approximately angularly shaped projection particles, each containing 99% or more of silica (SiO₂) component, are used. It should be noted that the average particle diameter of the projection particles is 100 *µ* m, and there is shown a normal distribution in which the projection particles, each having a particle diameter ranging from 50 *µ* m to 150 *µ* m, occupy 90% or more of the entire projection particles. Although the existence of a transfer layer, in which the component of each projection particle is transferred, is confirmed at the sliding face of the sliding member, a small variation in the component ratio is recognized. Furthermore, in Condition 5 of Embodiment 1, minute cavities as those found in the case of the spherically shaped projection particles are not formed, but the existence of a large number of extremely minute striations is confirmed as if the sliding face has been scraped.

In Comparative Example 1, a conventional sliding member is ground to a surface roughness of about Ra 0.3 *µ* m to about 0.6 *µ* m, and is then finished to a surface roughness of Ra 0.2 *µ* m or less by lapping.

The test results concerning the frictional wear properties according to the specifications shown in Table 1 will be described below.

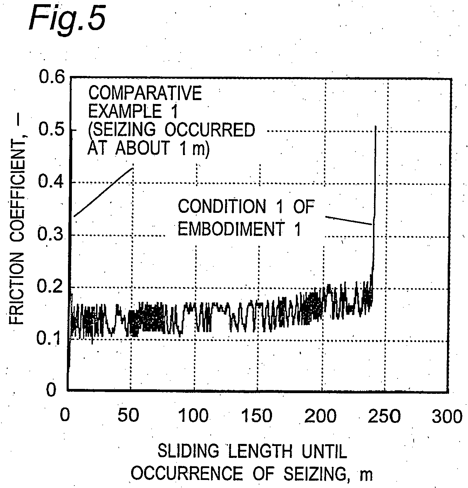

Fig. 5 shows a characteristic graph indicating changes in friction coefficient with time in Condition 1 of Embodiment 1 according to the present invention, and in Comparative Example 1. That is to say, shown in this graph are the friction coefficients measured in real time for each sliding length.

The measurement results shown in Fig. 5 indicate the following facts. According to Comparative Example 1 in which the conventional sliding member is used, seizing has occurred promptly at a sliding length of about 1 m. On the other hand, according to Condition 1 of Embodiment 1, the friction coefficient of the sliding member 101 remains at about 0.1 to about 0.2 so as to maintain the sliding at a boundary lubrication region, and the sliding length until the occurrence of seizing is approximately 240 times as much as that in Comparative Example 1. Accordingly, it is confirmed that the sliding member 101 in Condition 1 of Embodiment 1 is significantly improved in wear resistance and seizing resistance.

The reasons why the sliding member 101 in Condition 1 of Embodiment 1 has high wear resistance and seizing resistance as described above are believed to be as follows. Due to an impact force resulting from the projection of the projection particles 111, the temperatures at the sliding face of the sliding member 101 and at the surface of each projection particle 111 are instantaneously increased. At this point in time, both of the surfaces are activated, and silica (SiO₂), which is a component of each projection particle 111, is transferred onto the sliding face, thus providing high mechanical strength properties due to the high hardness of silica (SiO₂).

Further, due to an impact force resulting from the projection of the projection particles 111, plastic deformation instantaneously occurs in the sliding face to form a large number of minute cavities 105, and each of these minute cavities 105 serves as an oil receiver even in the situation where the oil film thickness is thin, thus providing the lubrication effect at the contact sliding portion. Furthermore, in the sliding member 101 in Condition 1 of Embodiment 1, it is believed that the refinement of composition of the transfer layer 104 is caused to increase the internal stress, and therefore, fracture toughness is improved.

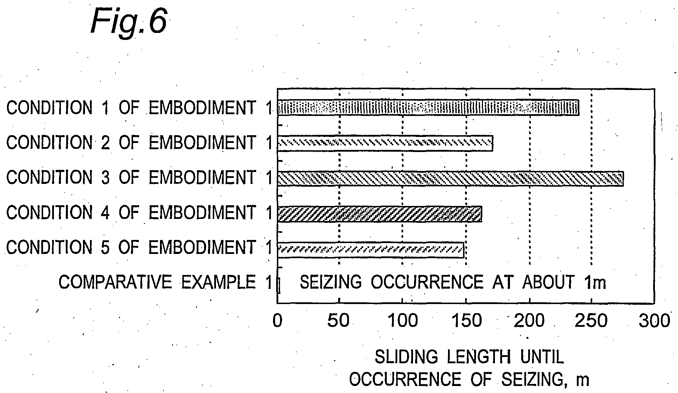

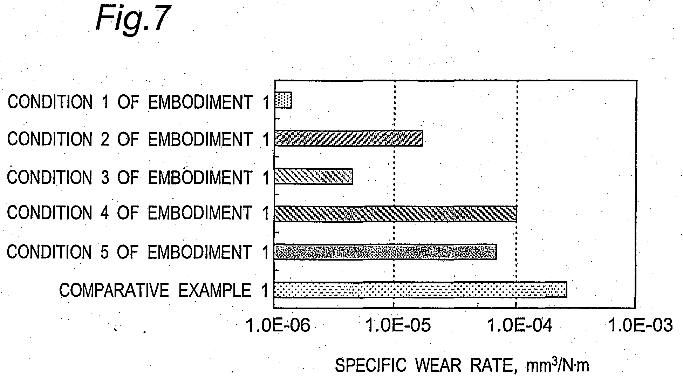

Fig. 6 shows a characteristic graph concerning sliding lengths until the occurrence of seizing in the sliding members in Conditions 1 to 5 of Embodiment 1, and in Comparative Example 1. That is to say, shown in this graph are results of comparisons made about sliding lengths until the occurrence of seizing for each condition. Fig. 7 shows a characteristic graph indicating specific wear rates in Conditions 1 to 5 of Embodiment 1 and in Comparative Example 1. That is to say, shown in this graph are results of comparisons made about the specific wear rates [mm3/N·m], which are calculated by dividing the wear volume after the test by the sliding length and vertical load for each condition.

Referring to Figs. 6 and 7, based on the comparison made between Condition 1 of Embodiment 1 (in which spherically shaped projection particles 111 are projected) to Condition 5 of Embodiment 1, and the conventional Comparative Example 1, improvements in seizing resistance and wear resistance can be confirmed in any of these conditions. However, it can be seen that the degree of improvement differs for each condition.

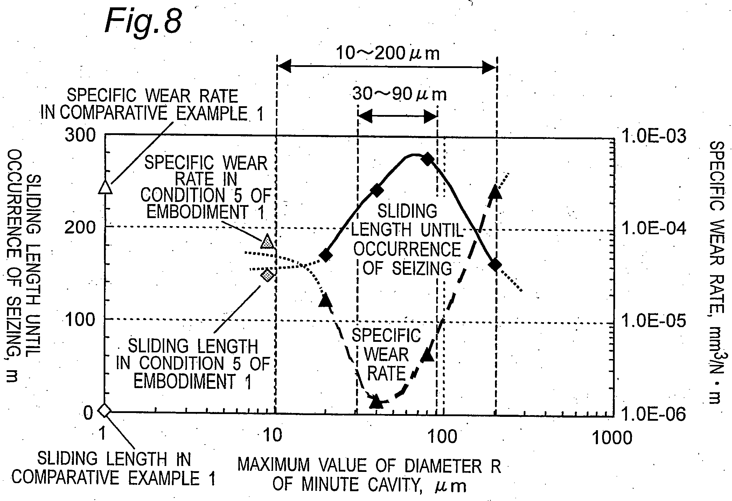

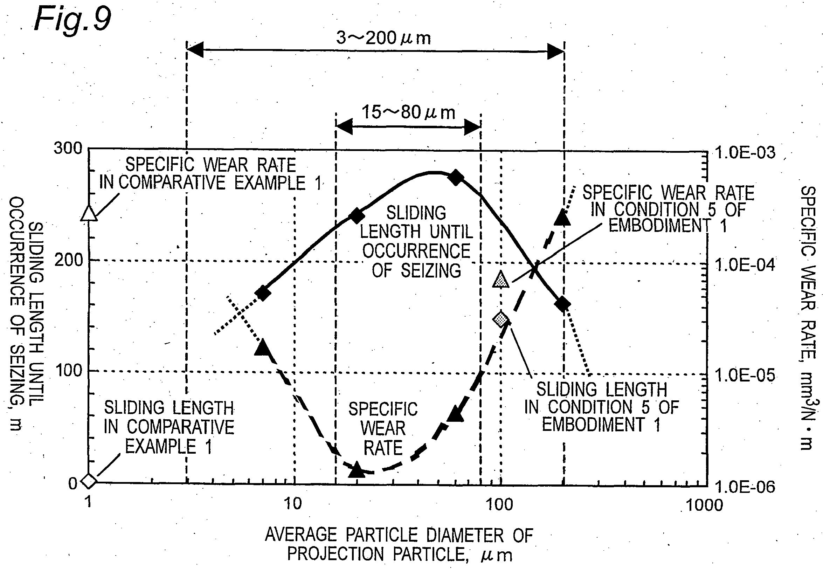

Therefore, referring to Figs. 8 and 9, consideration will be given to the influences of the maximum value of the diameter R of each minute cavity 105 (i.e., sliding face opening diameter), and the average particle diameter of the projection particles 111 upon seizing resistance and wear resistance.

Fig. 8 shows a characteristic graph indicating correlations among the maximum values of the minute cavity diameters, the sliding lengths until the occurrence of seizing, and the specific wear rates in Conditions 1 to 5 of Embodiment 1 and in Comparative Example 1, in the case where the projection particles are each formed into an approximately spherical shape. That is to say, shown in this graph are results of evaluation on the correlations. In Fig. 8, the horizontal axis represents the maximum value of the minute cavity diameter R [*µ* m], the first vertical axis (i.e., the vertical axis at the left side of Fig. 8) represents the sliding length until the occurrence of seizing [m], and the second vertical axis (i.e., the vertical axis at the right side of Fig. 8) represents the specific wear rate [mm3/N·m]. Further, in Fig. 8, the sliding lengths until the occurrence of seizing in Conditions 1 to 5 of Embodiment 1 are each denoted by a square mark with black color (◆)_{.} However, the sliding length until the occurrence of seizing in Condition 5 of Embodiment 1 is denoted by a square mark with gray color ( 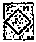 ). Furthermore, the sliding length until the occurrence of seizing in Comparative Example 1 is denoted by a square mark with white color (◊). On the other hand, the specific wear rates in Conditions 1 to 5 of Embodiment 1 are each denoted by a triangle mark with black color (▲). However, the specific wear rate in Condition 5 of Embodiment 1 is denoted by a triangle-mark with gray color ( 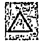 ). Also, the specific wear rate in Comparative Example 1 is denoted by a triangle mark with white color (Δ).

Fig. 9 shows a characteristic graph indicating correlations among the average particle diameters, sliding lengths and specific wear rates in the case where the projection particles are each formed into an approximately spherical shape. That is to say, shown in this graph are results of evaluation on the correlations. In Fig. 9, the horizontal axis represents the average particle diameter of the projection particles [*µ* m], the first vertical axis (i.e., the vertical axis at the left side of Fig. 9) represents the sliding length until the occurrence of seizing [m], and the second vertical axis (i.e., the vertical axis at the right side of Fig. 9) represents the specific wear rate [mm3/N·m]. Further, in Fig. 9, the sliding lengths until the occurrence of seizing in Conditions 1 to 5 of Embodiment 1 are each denoted by the square mark with black color (◆). However, the sliding length until the occurrence of seizing in Condition 5 of Embodiment 1 is denoted by the square mark with gray color ( 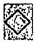 ). Furthermore, the sliding length until the occurrence of seizing in Comparative Example 1 is denoted by the square mark with white color (◊). On the other hand, the specific wear rates in Conditions 1 to 5 of Embodiment 1 are each denoted by the triangle mark with black color (▲). However, the specific wear rate in Condition 5 of Embodiment 1 is denoted by the triangle mark with gray color ( 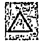 ). Also, the specific wear rate in Comparative Example 1 is denoted by the triangle mark with white color (Δ).

Referring to Figs. 8 and 9, it can be seen that if the maximum value of the diameter R of each minute cavity 105 is in the range between 30 *µ* m and 90 *µ* m, the sliding length until the occurrence of seizing reaches the maximal value, and the specific wear rate reaches the minimal value.

This is believed to be due to the fact that if the diameter R of each minute cavity 105 becomes too large, the adjacent minute cavities 105 are connected together to cause lubricating oil to flow out of the minute cavities 105, which makes it hard to achieve the lubrication effect, thus causing the occurrence of seizing relatively quickly; on the other hands, if the diameter R of each minute cavity 105 becomes too small, the surface shape of the sliding member becomes substantially similar to a conventional smooth surface shape.

As shown in Fig. 8, in order to improve the seizing resistance and wear resistance compared with those of the conventional sliding member, the maximum value of the diameter R of each minute cavity 105 is preferably in the range between 10 *µ* m and 200 *µ* m. In order to further improve the seizing resistance and wear resistance, the maximum value of the diameter R of each minute cavity 105 is more preferably in the range between 30 *µ* m and 90 *µ* m.

As shown in Fig. 9, in accordance with the appropriate maximum value of the diameter R of each minute cavity 105, the average particle diameter of the projection particles 111 to be projected is preferably in the range between 3 *µ* m and 200 *µ* m; furthermore, in order to drastically improve the seizing resistance and wear resistance, the average particle diameter of the projection particles 111 to be projected is more preferably in the range between 15 *µ* m and 80*µ* m.

Next, referring to Figs. 6 and 9, consideration will be given to the seizing resistance and wear resistance in Condition 5 of Embodiment 1, which is not according to the invention, in which the angularly shaped projection particles are projected.

The seizing resistance and wear resistance in Condition 5 of Embodiment 1 are evidently improved compared with those of Comparative Example 1. However, it can be seen that, the seizing resistance and wear resistance in Condition 5 of Embodiment 1 are sightly lower compared with the case where the spherically shaped projection particles 111 having the substantially equal average particle diameter are projected.

At the sliding face in the case where the angularly shaped projection particles are projected, although variations are present to some extent, a transfer layer having the properties of silica (SiO₂) is formed, thus increasing the mechanical strength of the sliding face of the sliding member. However, it is believed that, even if the angularly shaped projection particles having the average particle diameter of 100 *µ* m are projected, the maximum value of the minute cavity diameter R does not reach 10 *µ* m, which makes it impossible for each cavity to sufficiently function as an oil receiver; therefore, compared with the spherically shaped projection particles, the wear of the contact sliding portion quickly proceeds to cause seizing. As a result, the projection particles 111 are more preferably spherically shaped.

Thus, in Embodiment 1, the projection particles 111 are projected onto the sliding face of the sliding member 101, thereby forming the transfer layer 104 in which the component of each projection particle 111 is transferred and the composition is dense, and forming the minute cavities 105. Therefore, the mechanical strength and fracture toughness of the sliding face are increased, and the wear at the contact sliding portion is decreased, thus providing a highly reliable sliding member and a manufacturing method thereof.

In addition; in the sliding member manufacturing method in which such projection particles 111 are projected at high velocity onto the sliding face of the sliding member 101, the material properties, shapes and projecting conditions of the projection particles 111 are adjusted. Thus, it becomes.possible to simultaneously form, at the sliding face of the sliding member 101, the transfer layer 104 in which the component of each projection particle 111 is transferred, and a large number of the minute cavities 105, and to modify the surface so that the surface has high wear resistance and high seizing resistance. Therefore, the sliding member manufacturing method according to Embodiment 1 needs no complicated apparatus unlike a PVD or CVD method, and thus can inexpensively manufacture the sliding member.

Although silica (SiO₂) is used as the material for the projection particles 111 in the sliding member manufacturing method according to Embodiment 1, alumina (Al₂O₃) and/or mullite (3Al₂O₃-2SiO₂) may alternatively be used. Even in that case, since alumina and mullite each have the properties similar to those of silica (SiO₂), such as a high hardness and a high mechanical strength, the mechanical strength of the sliding face of the sliding member 101 is improved due to these component characteristics, thus achieving the same wear reducing effect as in the case where silica (SiO₂ is used.

Moreover, if calcium oxide (CaO) is used as the material for the projection particles 111, since calcium oxide (CaO) has a property such as an inorganic solid lubrication effect, the metal contact at the sliding face of the sliding member 101 is suppressed due to this component property, thus achieving the wear reducing effect.

If magnesium oxide (MgO) is used, since magnesium oxide (MgO) has properties such as high ductility and high fracture toughness, microscopic chipping at the sliding face of the sliding member 101. is suppressed due to this component property, thus achieving the wear reducing effect.

Further, if triiron tetroxide (Fe₃O₄ is used as iron oxide,' since triiron tetroxide (Fe₃O₄ has a property such as a high sliding property, the adhesive wear at the sliding face of the sliding member 101 is suppressed due to this component property, thus achieving the wear reducing effect.

Furthermore, in Embodiment 1, the projection particles 111 are projected onto the sliding face of the sliding member 101 through the tip outlet 126 of the nozzle 125 at a velocity of about 100 m/sec by means of the carrier gas 123. The present inventors confirmed that if the projection velocity of the projection particles 111 is too low, a sufficient kinetic energy cannot be transmitted to the base material 102 at the time of collision, resulting in insufficient formation of the transfer layer 104 and the minute cavities 105; on the other hand, if the projection velocity is too high, the roughness of the sliding face of the sliding member 101 becomes significant. Accordingly, the projection velocity of the projection particles 111 is preferably appropriately selected in accordance with, for example, the following factors: the material property (e.g., hardness) of the base material 102; the material property, (e.g., hardness) of each projection particle 111 to be projected; the particle diameter - of each projection particle 111 to be projected; the required surface roughness of the sliding face after the projection; and/or the diameter R of each minute cavity to be formed.

It should be noted that, as for the sliding portion between dissimilar metals, e.g., an aluminum-based material (aluminum alloy) and an iron-based material (bearing steel), in the sliding members of Embodiment 1, the transfer layer 104 and the minute cavities 105 are formed at the sliding member 101 made of an aluminum-based material. Therefore, it is preferable to project the projection particles 111 onto the sliding face of the sliding member 101 that is a softer one of the sliding members opposed to each other. This is because when the projection particles 111 are projected, some convex protrusions are formed around' the minute cavities 105 at the sliding- face of the sliding member 101, which might cause surface roughness to damage the opposing sliding member. However, if the sliding member, onto which the projection particles are projected, is a softer one of the sliding members as in Embodiment 1, the convex protrusions are planarized due to instantaneous plastic deformation at the time of application of a sliding load upon the sliding portion, thus making it possible to avoid damaging the opposing member during sliding.

The projection of the projection particles 111 onto the sliding face of the sliding member 101, which is a softer one of the sliding members opposed to each other, as described above is similarly applied even if a sliding portion is provided between similar metals, e.g., iron-based materials or aluminum-based materials. That is to say, if similar metals are used for the sliding members opposed to each other, it is preferable to project the projection particles 111 onto the sliding face of the sliding member 101, which is a softer one of the sliding members opposed to each other, thus forming, the transfer layer and the minute cavities.

Although a structure in which the projection particles 111 are transported to the projection particle supply device by means of a gear pump (not shown) is exemplified in Embodiment 1, the present invention is not limited to this. Alternatively, any other structure may be used as long as the projection particles 111 can be stably supplied, and even in that case, the similar effects can be achieved.

Moreover, although air, which is an incompressible fluid, is used as the carrier gas 123 in Embodiment 1, the similar effects can be obtained even if a nitrogen gas containing no oxygen is used.

### Embodiment 2

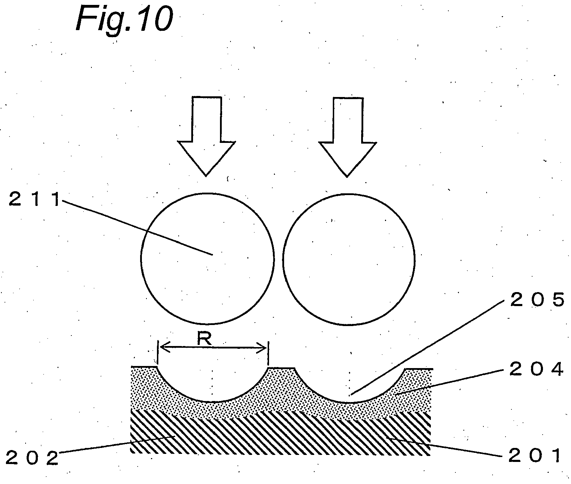

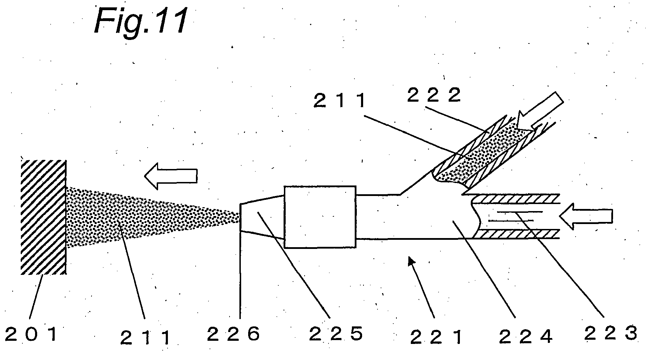

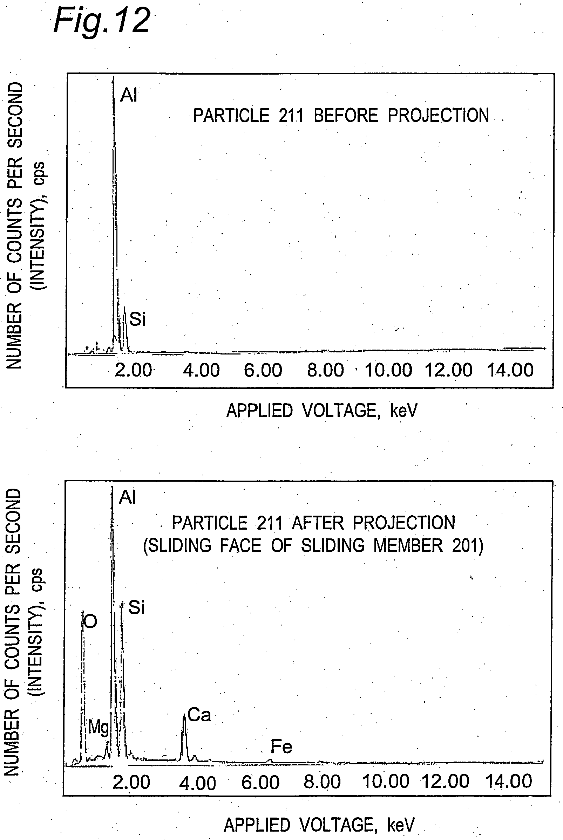

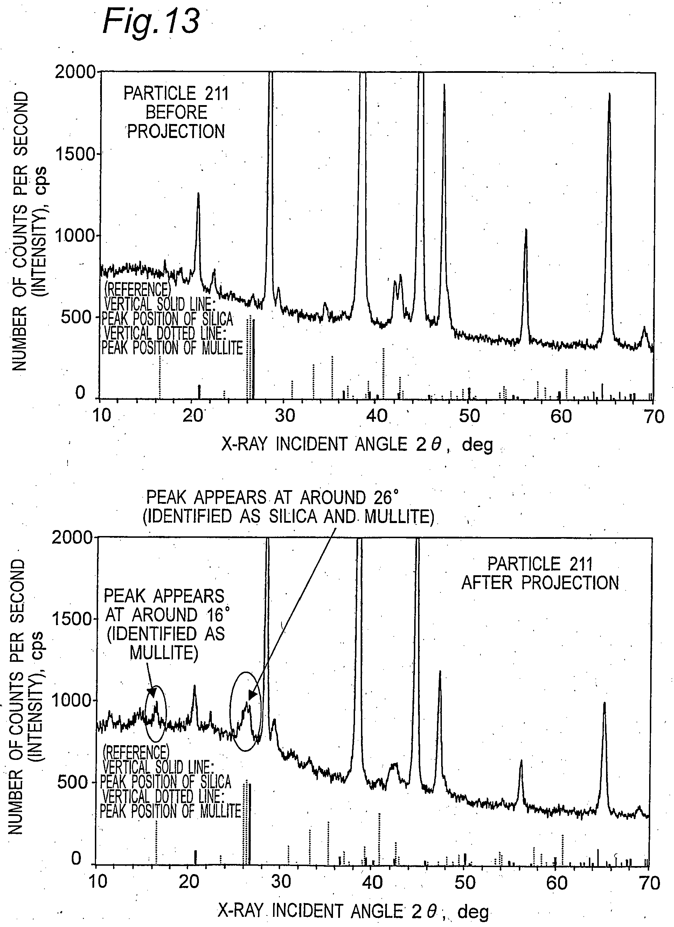

Fig. 10 shows an enlarged schematic cross-sectional view partially illustrating a sliding member in Embodiment 2 according to the present invention. Fig. 11 shows a schematic view illustrating a method for manufacturing the sliding member of Embodiment 2. Fig. 12 shows characteristic graphs indicating results of EPMA elemental analysis on a sliding face of the sliding member of Embodiment 2. And Fig. 13 shows characteristic graphs indicating results of X-ray diffraction analysis on the sliding face of the sliding member of Embodiment 2.

A sliding member 201 according to the present invention will be described in detail below.

The sliding member 201 is formed using, as a base material 202, an aluminum alloy (JIS: A6063) made of an aluminum-based material.

At a sliding face of the sliding member 201, a transfer layer 204, in which mullite (3Al₂O₃·2SiO₂), silica (SiO₂) and calcium oxide (CaO) are transferred to a thickness of a few *µ* m, is formed. As used herein, the term "transfer" means a process of causing a component of each projection particle 211 to be adhered and interfused to a surface of the base material 202 and the vicinity of the surface. In this embodiment, the transfer is realized by projecting the projection particles 211, having components which are desired to be transferred, onto the sliding face of the sliding member 201 at a predetermined velocity.

In addition, a large number of extremely minute cavities 205, each formed into an approximately hemispherical surface, are further provided at the sliding face.
Next, a method for manufacturing the sliding member 201 of Embodiment 2 will be described in detail.

First, the surface of the base material 202, which is to be the sliding face of the sliding member 201, is ground so as to be finished to a surface roughness of about Ra 0.3 *µ* m. Then, a projection particle supply device 221 (see Fig. 11) is used to project the projection particles 211 onto the sliding face of the sliding member 201.

In the projection particle supply device 221, a projection particle transport pipe 222 transporting' the projection particles 211 stored in a storage tank (not shown), is connected with a gas pipe 224 flowing a carrier gas 223 flows, and a nozzle 225 is disposed at a tip of the gas pipe 224.

In Embodiment 2, approximately spherically shaped fly ash, 70% to 80% of which is occupied by silica (SiO₂), alumina (Al₂O₃) and mullite (3Al₂O₃·2SiO₂), and the remainder of which is constituted by calcium oxide (CaO), magnesium oxide (MgO), iron oxide and the like, is used as the material for the projection particles 211. The average particle diameter of the projection particles 211 is 7 *µ* m, and there is shown a normal distribution in which the projection particles, each having a particle diameter ranging from 3 *µ* m to 16 *µ* m, occupy 90% or more of the entire projection particles. The fly ash used in this embodiment complies with JIS Class 5 or Class 10.

"Fly ash" is an industrial waste produced in the following manner. In a boiler of a coal-fired power plant, an ash particle, which has been molten due to the combustion of pulverized coal, floats within a high-temperature combustion gas, and becomes a microscopic particle so as to be colleted, as an industrial waste, by an electric dust collector with a temperature reduction at the boiler exit. The Fly ash produced in this manner is stored in the dry state', and is further compounded or subjected to particle size control by a classifier depending on usage such as recycle and/or reuse so as to be stored in a silo on a product-by-product basis.

Since fly ash is a microscopic particle and is normally approximately spherically shaped, the use of fly ash increases fluidity during concrete construction and/or mortar construction. Therefore, by utilizing this property, fly ash is generally used in the field of civil engineering and construction. Accordingly, the fly ash, which has been repeatedly used for the projection of the projection particles 211 as in Embodiment 1, is not straightly discarded but can be reused as an admixture for concrete and/or mortar, resulting in an advantage that the projection particles 211 are global-environment-friendly.

The projection particles 211, stored in the storage tank, are allowed to pass through the projection particle transport pipe 222 by means of an electric gear pump (not shown), and are transported to a connection between the projection particle transport pipe 222 and the gas pipe 224. The carrier gas 223 inside the gas pipe 224 is a dry air provided by utilizing an air pump (not shown), and the gas pressure is adjusted so as to be in the range between 0.3 MPa and 0.6 Mpa.

The projection particles 211, continuously transported to the connection between the gas pipe 224 and the projection particle transport pipe 222 in this manner, are projected approximately perpendicularly to the sliding face of the sliding member 201 through a tip outlet 226 of the nozzle 225 at a velocity of about 100 m/s by means of the carrier gas 223. It should be noted that the distance between the tip outlet 226 of the nozzle 225 and the sliding face of the sliding member 201 is in the range between 30 mm and 40 mm.

In the above-described manufacturing process steps, the diameter R of each extremely minute cavity 205 (i.e., sliding face opening diameter), formed at the sliding face of the sliding member 201, is about 20 *µ* m at the most from shape measurement results. As used herein, "sliding face opening diameter" means the diameter of an approximately circular opening at a flat sliding face.

Furthermore, the sliding member 201 of Embodiment 2 fabricated as described above will be described in more detail with reference to Figs. 12 and 13.

Fig. 12 shows comparison results of analysis on the sliding face of the sliding member 201 before and after the projection of the projection particles 211, which are obtained, by utilizing an EPMA analyzer. In each graph shown in Fig. 12, the horizontal axis represents an applied voltage [keV], while the vertical axis represents the number of counts per second (intensity) [cps]. It should be noted that the' analytical results- shown in Fig. 12 are obtained under the analytical condition in which the applied voltage is 15 keV at the most, and there is shown information about elements existing at a depth of about 2 *µ* m from the surface. From these results, it can be seen that the peaks of silicon (Si), oxygen (O) and calcium (Ca), which are constituent elements of the projection particles 211, after the projection are significantly higher than those of silicon (Si), oxygen (O) and calcium (Ca) before the projection. Further, although slightly, the peaks of iron (Fe) and magnesium (Mg) are also detected after the projection.

Fig. 13 shows comparison results of analysis on the sliding face of the sliding member 201 before and after the projection of the projection particles 211, which are obtained by utilizing an X-ray diffraction analyzer. In each graph shown in Fig. 13, the horizontal axis represents an X-ray incident angle (diffraction angle 2θ) [deg], while the vertical axis represents the number of counts per second (intensity) [cps]. It should be noted that the analytical results shown in Fig. 13 are obtained by currying, out a thin film X-ray diffraction method, and there is shown information about a compositional structure at a depth of about 5 *µ* m from the surface. A plurality of vertical solid lines, starting from the horizontal axis at the bottom of each of the upper and lower graphs in Fig. 13, each denote the peak position of silica (SiO₂), while a plurality of vertical dotted lines, each denote.the peak position of mullite (3Al₂O₃·2SiO₂) From these results, it can be seen that the peaks at a diffraction angle 2θ of around 16° and 26° appear after the projection. These can be identified as mullite and silica. Furthermore, although calcium oxide, magnesium oxide and ferric oxide are not detected by X-ray diffraction, it can be determined that calcium oxide, magnesium oxide and ferric oxide exist at the sliding face as amorphous substances since they each exhibit high heat stability.

From the results shown in Figs. 12 and 13, it is possible to determine that the transfer layer 204, in which components of each projection particle 211, i.e., mullite (3Al₂O₃·2SiO₂), silica (SiO₂) and calcium oxide (CaO), have been transferred, is formed at the sliding face of the sliding member 201. Although not shown, the results of the X-ray diffraction analysis, conducted on the compositional structure at a depth of 10 *µ* m or more from the surface, indicate that the peaks of mullite (3Al₂O₃·2SiO₂) and silica. (SiO₂) become extremely low. Therefore, the thickness of the transfer layer 204, containing a large amount of fly ash component, is estimated to be about a few *µ* m.

The frictional wear properties of the sliding member 201, formed by the above-described manufacturing process steps, are evaluated by utilizing a ball-on-disk tester. The test is carried out in the following manner: a stainless steel (SUS304) ball, made of an iron-based material and having a spherical diameter of 9.5 mm and a surface roughness of Ra 0.2 or less, is used as an opposing sliding member (not shown); turbine oil is used as lubricating oil; and the test is performed in an atmosphere at a temperature of 22°C to 28°C, and at a relative humidity of 55% to 65%. The test condition includes a vertical load of 19.6 N and a sliding velocity of 0.1 m/s. It should be noted that only 0.05 mL of the lubricating oil is dropped before the test, and the lubricating oil is consumed in accordance with an increase in sliding length (sliding distance). In the middle of the test, wear proceeds at a contact sliding portion, and at the point in time when the friction coefficient has reached 0.3 or more, it is determined that the lubricating oil has been depleted and seizing has occurred, thus bringing the test to an end. The above-described condition is defined as Condition 1 of Embodiment 2.

Furthermore, in order to evaluate the frictional wear properties concerning the sliding members of Embodiment 2 according to the present invention, other specifications, in which the shapes and sizes of the projection particles are changed, are also shown in Table 2 below along with the specification of Condition 1 of Embodiment 2. Also in any of the other specifications, an aluminum alloy (A6063) made of an aluminum-based material is used as the base material 102, and a stainless steel (SUS304) ball, made of an iron-based material and having the similar spherical diameter and surface roughness, is used as the opposing sliding member.

**Table.2**

| | | EMBODIMENT 2 CONDITION 1 | EMBODIMENT 2 CONDITION 2 | EMBODIMENT 2 CONDITION 3 | COMPARATIVE EXAMPLE 1 |
|---|---|---|---|---|---|
| BASE MATERIAL | | ALUMINUM DIE-CAST | ALUMINUM DIE-CAST | ALUMINUM DIE-CAST | ALUMINUM DIE-CAST |
| PROCESS | | PROJECTION OF PROTECTION PARTICLE | PROJECTION OF PROJECTION PARTICLE | PROJECTION OF PROJECTION PARTICLE | LAPPING (Ra0.2) |
| | PARTICLE | FLY ASH | SILICA | FLY ASH | - |
| | COMPONENT | Al₂O₃, SiO₂ ··· 70% CaO, MgO, Fe₂O₃ ···30% | SiO₂ | Al₂O₃, SiO₂ ··· 70% CaO, MgO, Fe₂O₃ ···30% | - |
| | PARTICLE DIAMETER [*µ* m] | 7 | 7 | 9.4 | - |
| | SHAPE | SPHERICAL | SPHERICAL | ANGULAR | |
| SURFACE STATE AFTER PROCESS | | TRANSFER LAYER MINUTE CAVITY | TRANSFER LAYER MINUTE CAVITY | TRANSFER^{.} LAYER MINUTE STRIATION | - |
| . | PARTICLE COMPONENT RATIO IN TRANSFER LAYER (WHICH IS 1 IN . CONDITION 1 OF EMBODIMENT 2) | 1 | - | 1 OR LESS | - |
| | CAVITY DIAMETER [*µ* m] | ~20 | ~20 | - | - |

In Condition 2 of Embodiment 2, a sliding face of a sliding member is ground to a surface roughness of Ra 0.3 *µ* m, and then projection particles are projected onto the sliding face of the sliding member. As the projection particles, approximately spherically shaped projection particles, each containing 99% or more of silica (SiO₂) component, are used. It should be noted that the average particle diameter of the projection particles is 7 *µ* m, and there is shown a normal distribution in which the projection particles, each having a particle diameter, ranging from 3 *µ* m to 16 *µ* m, occupy 90% or more of the entire projection particles. At the sliding face of the sliding member, a transfer layer in which silica (SiO₂) component is transferred, and minute cavities each formed into an approximately hemispherical surface, are provided. It should also be noted that the diameter R of each minute cavity (i.e., sliding face opening diameter) is about 20 *µ* m at the most, which is substantially similar to that of each minute cavity in Condition 1 of Embodiment 2.

In Condition 3 of Embodiment 2, which is not according to the invention a sliding face of a sliding member is ground to a surface roughness of Ra 0.3 *µ* m, and then projection particles are projected onto the sliding face of the sliding member. As the material for the projection particles, approximately angularly shaped fly ash, 70% to 80% of which is occupied by silica (SiO₂), alumina (Al₂O₃), and mullite, (3Al₂O₃·2SiO₂), and the remainder of which is constituted by calcium oxide (CaO), magnesium oxide (MgO), iron oxide and the like, is used. It should be noted that the average particle diameter of the projection particles is 9.4 *µ* m, and there is shown a normal distribution in which the projection particles, each having a particle diameter ranging from 3 *µ* m to 24 *µ* m, occupy 90% or more of the entire projection particles. Although the existence of a transfer layer, in which the component of each projection particle is transferred, is confirmed at the sliding face of the sliding member by analysis, a small variation in the component ratio is recognized. Furthermore, minute cavities as those found in the case of the spherically shaped projection particles are not formed, but the existence of a large number of extremely minute striations is confirmed as if the sliding face has been scraped.

In Comparative Example 1, a conventional sliding member is ground to a surface roughness of about Ra 0.3 *µ* m to about 0.6 *µ* m, and is then finished to a surface roughness of Ra 0.2 *µ* m or less by lapping.

The test results concerning the frictional wear properties according to the specifications shown in Table 2 will be described below.

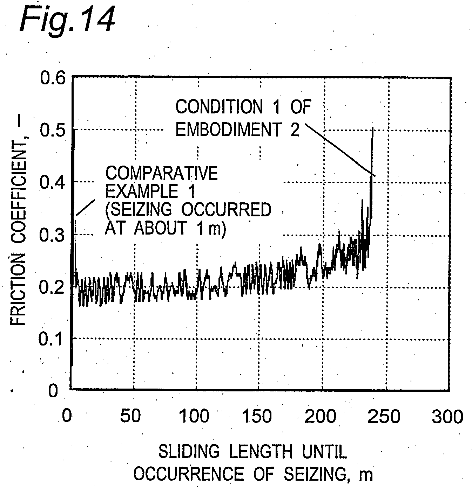

Fig. 14 shows a characteristic graph indicating changes in friction coefficient with time in Condition 1 of Embodiment 2 according to the present invention, and in Comparative Example 1. That is to say, shown in this graph are the friction coefficients measured in real time for each sliding length.

The measurement results shown in Fig. 14 indicate the following facts. According to Comparative Example 1 in which the conventional sliding member is used, seizing has occurred promptly at a sliding length of about 1 m. On the other hand, according to Condition 1 of Embodiment 2, the friction coefficient of the sliding member 201 remains at about 0.15 to about 0.25 so as to maintain the sliding at a boundary lubrication region, and the sliding length until the occurrence of seizing is approximately 240 times as much as that in Comparative Example 1. Accordingly, it is confirmed that the sliding member 201 according to Condition 1 'of Embodiment 2 is significantly improved in wear resistance and seizing resistance.

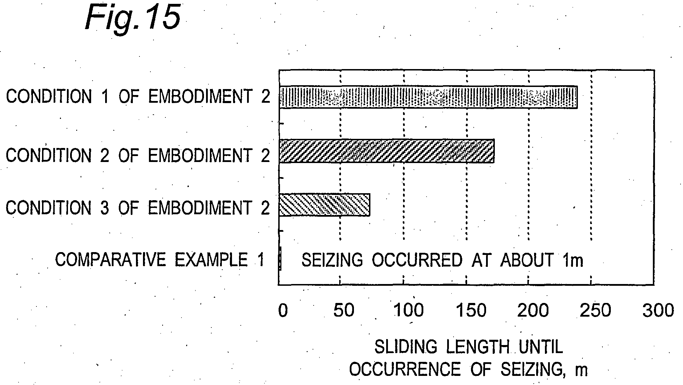

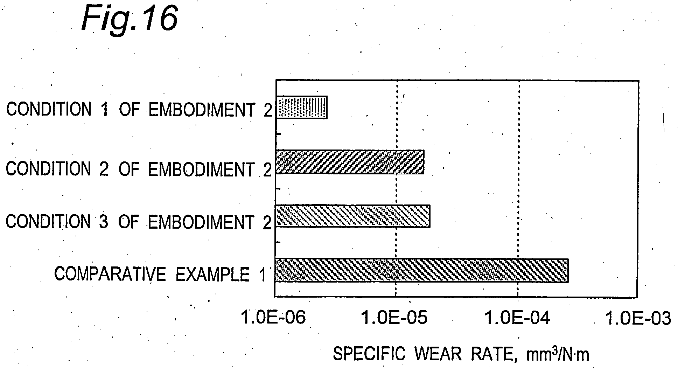

Fig. 15 shows a characteristic graph concerning sliding lengths until the occurrence of seizing in Conditions 1 to 3 of Embodiment 2, and in Comparative Example 1. That is to say, shown in this graph are results of comparisons made about sliding lengths until the occurrence of seizing for each condition. Fig. 16 shows a characteristic graph indicating specific wear rates in Conditions 1 to 3 of Embodiment 2, and in Comparative Example 1. That is to say, shown in this graph are results of comparisons made about the specific wear rates [mm3/N·m], which are calculated by dividing the wear volume after the test by the sliding length and vertical load for each condition.

Referring to Figs. 15 and 16, Condition 1 of Embodiment 2 is compared with Condition 2 of Embodiment 2 in which silica (SiO₂) having the same average particle diameter and the same spherical shape as in Condition 1 of Embodiment 2, is projected. The sliding length until the occurrence of seizing in Condition 1 of Embodiment 2 is 1.4 times as much as that in Condition 2 of Embodiment 2, while the specific wear rate (i.e., wear volume per unit sliding length) in Condition 1 of Embodiment 2 is about 1/10 of that in Condition 2 of Embodiment 2. Thus, it can be seen that the improvements in seizing resistance and wear resistance in Condition 1 of Embodiment 2 are more significant.

The reason for this is believed to be as follows. Due to an impact force resulting from the projection of the projection particles 211, the temperatures at the sliding face of the sliding member 201 and at the surface of each projection particle 211 are instantaneously increased. At this point in time, both of the surfaces are activated, and mullite (3Al₂O₃·2SiO₂), silica (SiO₂) and calcium oxide (CaO), which are components of the projection particles 211, are transferred onto the sliding face, thus providing high mechanical strength properties due to the high hardness of mullite (3Al₂O₃·2SiO₂) and silica (SiO₂). In addition, since the property of calcium oxide (CaO) such as the inorganic solid lubrication effect is also provided, the metal contact at the contact sliding portion is suppressed, thus improving the wear resistance at the contact sliding portion to a further extent compared with the Condition 2 of Embodiment 2.

Further, due to an impact force resulting from the projection of the projection particles 211, plastic deformation occurs in the sliding face to form a large number of minute cavities 205. As a result, each of these minute cavities 205 serves as an oil receiver even in the situation where the oil film thickness is thin, thus providing the lubrication effect at the contact sliding potion. Furthermore, it is believed that the refinement of composition of the transfer layer 204 is caused to increase the internal stress, and therefore, fracture toughness is improved.

Next, referring to Figs. 15 and 16, consideration will be given to the seizing resistance and wear resistance in Condition 3 of Embodiment 2, which is not according to the invention, in which the angularly shaped projection particles are projected. The seizing resistance and wear resistance in Condition 3 of Embodiment 2 are evidently improved compared with those of Comparative Example 1. However, it can be seen that, the seizing resistance and wear resistance in Condition 3 of Embodiment 2 are slightly lower compared with the case where the spherically shaped projection particles 211 having the substantially equal average particle diameter are projected.

At the sliding face in the case where the angularly shaped projection particles are projected, although variations are present to some extent, a transfer layer having the components of fly ash, i.e., the projection particles, is formed, thus increasing the mechanical strength of the sliding face of the sliding member, and providing the solid lubrication effect. However, it is believed that, since the minute cavities each functioning as an oil receiver are not sufficiently formed, the wear of the contact sliding portion quickly proceeds to cause seizing, as compared with the spherically shaped projection particles 211. From these consideration results, the projection particles 211 are preferably spherically shaped.

Thus, in Embodiment 2, the projection particles 211, each composed of fly ash, are projected onto the sliding face of the sliding member 201, thereby forming the transfer layer 204 in which the component of each projection particle 211 is transferred and the composition is dense, and providing the minute cavities 205, each' formed into an approximately hemispherical surface. As a result, the mechanical strength and fracture toughness of the sliding face are increased, thus providing the contact sliding portion with the inorganic solid lubrication effect. Furthermore, since the lubrication effect of a lubricant agerit is provided, the wear at the contact sliding portion is synergistically decreased, thus making it possible to fabricate a highly reliable sliding member.

In addition, in the sliding member manufacturing method in which such projection particles 211 are projected at high velocity onto the sliding face of the sliding member 201, the material properties, shapes and projecting conditions of the projection particles 211 are adjusted. Thus, it becomes possible to simultaneously form, at the sliding face of the sliding member 201, the transfer layer 204 in which the component of each projection particle 211 is transferred, and a large number of the minute cavities 205, and to modify the surface so that the surface has high wear resistance and high seizing resistance. Therefore, the sliding member' manufacturing method according to Embodiment 2 needs no complicated apparatus unlike a PVD or CVD method, and thus can inexpensively fabricate the sliding member.

Although fly ash is solely used as the material for the projection particles 211 in the method for manufacturing the sliding member 201 according to Embodiment 2, at least two or more components, selected from alumina, silica, mullite, calcium oxide, magnesium oxide, and iron oxide, may alternatively be simultaneously transferred onto the sliding face of the sliding member 201. In such a case, it is possible to siinultaneously provide the sliding face of the sliding member 201 with at least two or more of the following characteristics: an improvement in mechanical strength; the formation of a solid lubrication layer; an improvement in fracture toughness; and an improvement in sliding property. Consequently, the method for manufacturing the sliding member 201 according to Embodiment 2 enables the considerably efficient manufacture of the sliding member 201 having excellent characteristics.

Moreover, since fly ash is an industrial waste, the reuse thereof has been limited to the field of construction and/or civil engineering thus far. However, the manufacturing method shown in Embodiment 2 can create a new usage of fly ash so as to manufacture the sliding member 201 having high wear resistance and high seizing resistance. Fly ash according to JIS, used in Embodiment 2, has the following slightly variable chemical composition: 44.6% to 74.0% of silica (SiO₂) content; 16.4% to 38.3% of alumina (Al₂O₃) content; 0.1% to 14.3% of calcium oxide (CaO) content; 0.2% to 2.8% of magnesium oxide (MgO) content; and 0.6% to 22.7% of ferric oxide (Fe₂O3) content.

Although fly ash containing large amounts of mullite, (3Al₂O₃·2SiO₂), silica (SiO₂) and calcium oxide (CaO) is used as the material for the projection particle 211 in Embodiment 2, fly ash containing relatively large amounts of alumina (Al₂O₃) and magnesium oxide (MgO) may alternatively be used. Even in such a case, the wear reducing effect can be similarly achieved, although the effect at the contact sliding portion differs.

In the case of fly ash coritaining a large amount of alumina (Al₂O₃) since alumina (Al₂O₃) has a high hardness and thus has a high mechanical strength similarly to mullite (3Al₂O₃·2SiO₂) and silica (SiO₂) the mechanical strength of the sliding face of the sliding member 201 is improved. Therefore, the use of fly ash can achieve the effect of considerably reducing the wear at the sliding face of the sliding member 201.

Further, in the case of fly ash containing a large amount of magnesium oxide (MgO), since magnesium oxide (MgO) has properties such as high ductility and high fracture toughness, microscopic chipping at the sliding face of the sliding member 201 is suppressed, thus achieving the wear reducing effect.

Furthermore, as for iron oxide, triiron tetroxide (Fe₃O₄) is generally said to be effective in improving sliding property and in suppressing adhesive wear at the contact sliding portion. Since iron oxide contained in fly ash according to JIS, used in Embodiment 2, is mainly ferric oxide (Fe₂O₃), the effect of improving sliding property is low. However, by intentionally mixing triiron tetroxide (Fe₃O₄) during a process of generating fly ash or at a stage of projection onto the sliding face, the adhesive wear at the sliding face of the sliding member 201 is suppressed because triiron tetroxide (Fe₃O₄ has a high sliding property, thus achieving the wear reducing effect.

In Embodiment 2, fly ash is used as the material for the projection particles 211 containing at least two components selected from alumina, silica, mullite, calcium oxide, magnesium oxide and iron oxide, so that two or more components are efficiently transferred. Alternatively, other projection particles similarly containing two or more components may be used, and even in such a case, the similar effects can be obtained.

### Embodiment 3

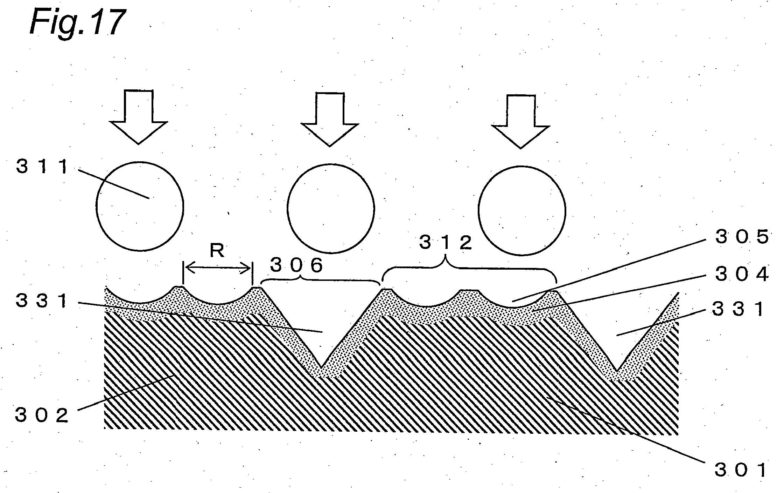

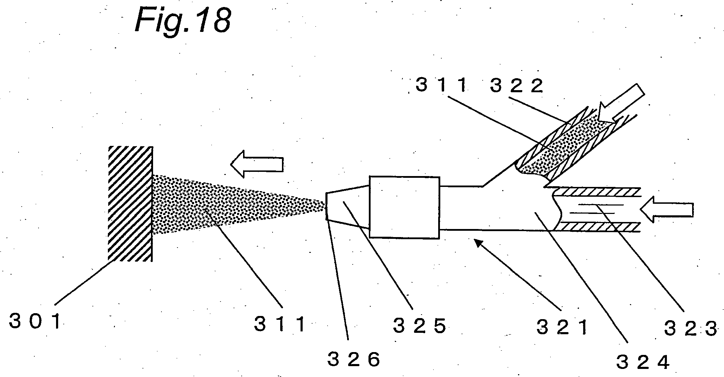

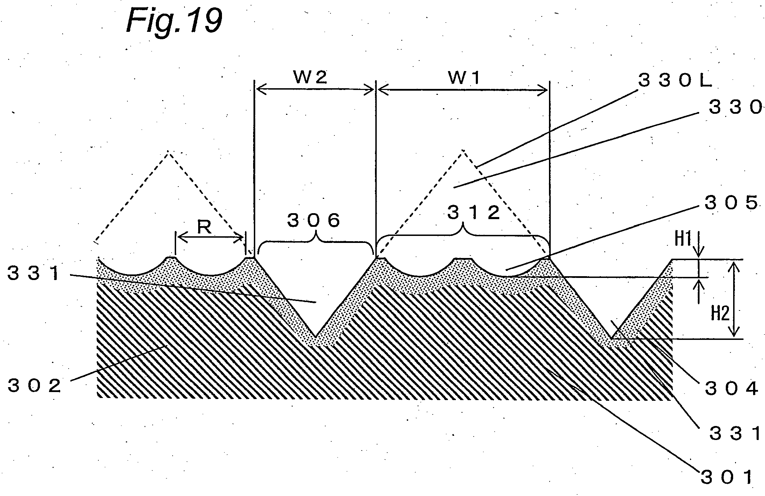

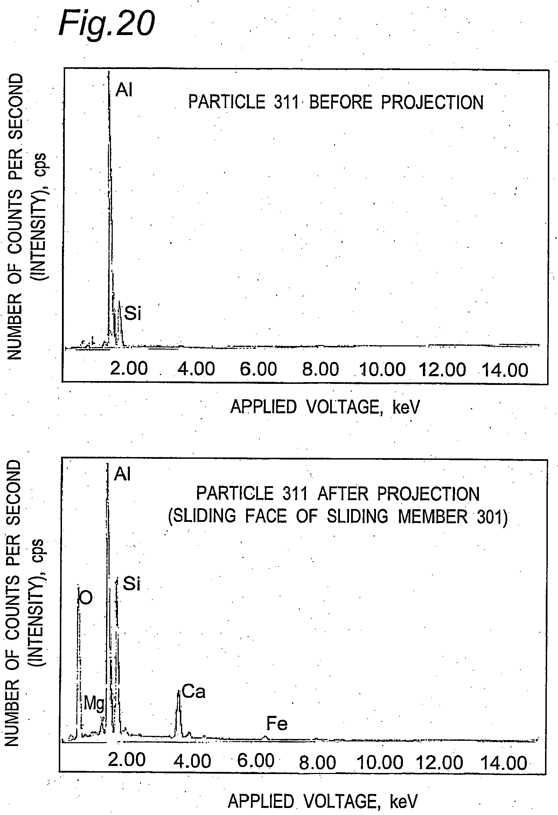

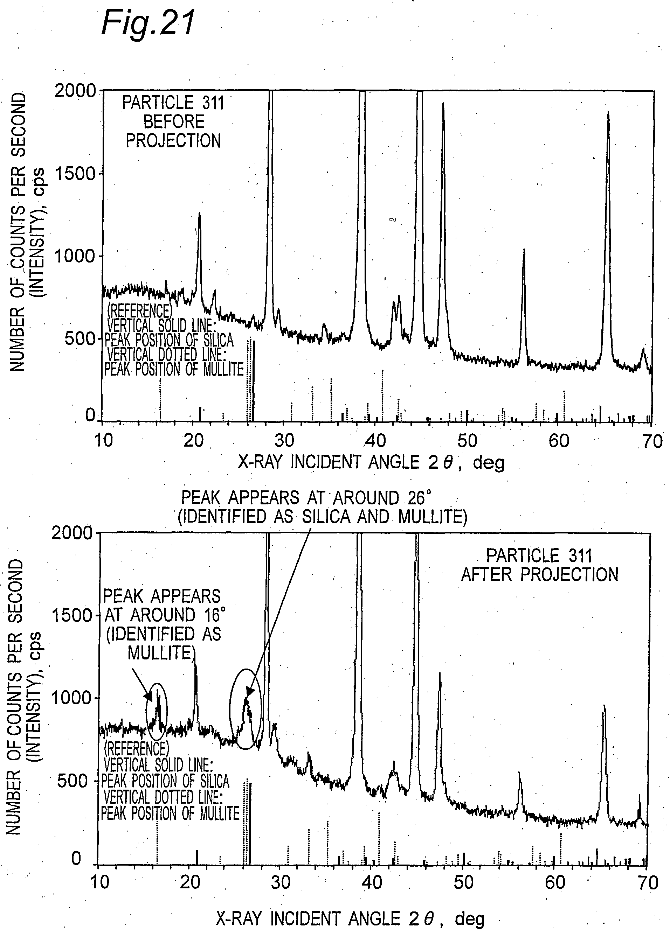

Fig. 17 shows an enlarged schematic cross-sectional view partially illustrating a sliding member in Embodiment 3 according to the present invention. Fig. 18 shows a schematic view illustrating a method for manufacturing the sliding member of Embodiment 3. Fig. 19 shows an enlarged schematic cross-sectional view illustrating minute cavities and minute grooves in Embodiment 3. Fig. 20 shown characteristic graphs indicating results of EPMA elemental analysis on a sliding face of the sliding member of Embodiment 3. And Fig. 21 shows characteristic, graphs indicating results of X-ray diffraction analysis on the sliding face of the sliding member of Embodiment 3.

A sliding member 301 of Embodiment 3 according to the present invention will be described in detail below.

The sliding member 301 is formed using, as a base material 302, an aluminum alloy (JIS: A6063) made of an aluminum-based material.

At a sliding face of the sliding member 301, a transfer layer 304, in which mullite (3Al₂O₃·2SiO₂), silica (SiO₂) and calcium oxide (CaO) are transferred to a thickness of a few *µ* m, is formed. As used herein, the term "transfer" means a process of causing a component of each projection particle 311 to be adhered and interfused to a surface of the base material 302 and the vicinity of the surface. In this embodiment, the transfer is realized by projecting the projection particles 311, having components which are desired to be transferred, onto the sliding face of the sliding member 301 at a predetermined velocity.

In addition, minute grooves 306 each having a wedge-shaped concave portion 331, and approximately flat portions 312 having a large number of extremely minute cavities 305, each formed into an approximately hemispherical surface, are alternately provided over the entire sliding face of the sliding member 301.

Next, a method for manufacturing the sliding member 301 of Embodiment 3 will be described in detail.

First, the surface of the sliding member 301 is ground in parallel with the sliding direction by using No 180 sandpaper. Then, a projection particle supply device 321 (see Fig. 18) is used to project the projection particles 311 onto the sliding face of the sliding member 301.

In the projection particle supply device 321, a projection particle transport pipe 322, through which the projection particles 311 stored in a storage tank (not shown) are transported, is connected with a gas pipe 324, through which a carrier gas 323 flows, and a nozzle 325 is disposed at a tip of the gas pipe 324.

In Embodiment 3, approximately spherically shaped fly ash, 70% to 80% of which is occupied by silica (SiO₂), alumina (Al₂O₃) and mullite (3Al₂O₃·2SiO₂), and the remainder of which is constituted by calcium oxide (CaO), magnesium oxide (MgO), iron oxide and the like, is used as the material for the projection particles 311. The average particle diameter of the projection particles is 7 *µ* m, and there is shown a normal distribution in which the projection particles, each having a particle diameter ranging from 3 *µ* m to 16 *µ* m, occupy 90% or more of the entire projection particles. The fly ash used in this embodiment complies with JIS Class 5 or Class 10. It should be noted that the fly ash used in Embodiment 3 is similar to that used in Embodiment 2'described above.

The projection particles 311, stormed in the storage tank, are allowed to pass through the projection particle transport pipe 322 by means of an electric gear pump (not shown), and are transported to a connection between the projection particle transport pipe 322 and the gas pipe 324. The carrier gas 323 inside the gas pipe 324 is a dry air provided by utilizing an air pump (not shown), and the gas pressure is adjusted so as to be in the range between 0.3 MPa and 0.6 MPa

The projection particles 311, continuously transported to the connection between the gas pipe 324 and the projection particle transport pipe 322 in this manner, are projected approximately perpendicularly to the sliding face of the sliding member 301 through a tip outlet 326 of the nozzle 325 at a velocity of about 100 m/s by means of the carrier gas 323. It should be noted that the distance between the tip outlet 326 of the nozzle 325 and the sliding face of the sliding member 301 is in the range between 30 mm and 40 mm.

In the above-described manufacturing process steps, the diameter R of each extremely minute cavity 305 (i.e., sliding face opening diameter), formed at the sliding face of the sliding member 301, is about 20 *µ* m at the most from shape measurement results. As used herein, "sliding face opening diameter" means the diameter of an approximately circular opening at a flat sliding face.

Before the projection, the sliding face of the sliding member 301 is irregular, and there exist convex portions 330 each having a wedge-shaped tip (which is indicated by the imaginary broken line 330L in Fig. 19) and the concave portions 331. The projection particles 311 are projected onto and collided against this sliding face, thus plastically deforming or removing the convex portions 330 on the sliding face. Since the convex portions 330 are apparently disappeared, only the concave portions 331 seem to remain on the sliding face. As a result, the minute grooves 306 consisting, of the remaining wedge-shaped concave portions 331, and the approximately flat portions 312 having the minute cavities 305 are alternately formed over the entire sliding face of the sliding member 301.

It should be noted that the depth H2 of each concave portion 331 of each minute groove 306 tends to be generally greater than the depth H1 of each minute cavity 305 (see Fig. 19). Further, the ratio W2/ (W1 + W2) between the width W2 of each minute groove 306 and the width W1 of each approximately flat portion 312 is in the range between about 0.05 and about 0.6 although it varies with location.

Furthermore, the sliding member 301 of Embodiment 3 fabricated as described above will be described in more detail with reference to Figs. 20 and 21.

Fig. 20 shows comparison results of analysis on the sliding face of the sliding member 301 before and after the projection of the projection particles 311, which are obtained by utilizing an EPMA analyzer. In each graph shown in Fig. 20, the horizontal axis represents an applied voltage [keV], while the vertical axis represents the number of counts per second (intensity) [cps]. It should be noted that the analytical results shown in Fig. 20 are obtained under the analytical condition in which the applied voltage is 15 keV at the most, and there is shown information about elements existing at a depth of about 2 *µ* m from the surface. From these results, it can be seen that the peaks of silicon (Si), oxygen (0) and calcium (Ca), which are constituent elements of the projection particles 311, after the projection are significantly higher than those of silicon (Si), oxygen (O) and calcium (Ca) before the projection. Further, although slightly, the peaks of iron (Fe) and magnesium (Mg) are also detected after the projection.

Fig. 21 shows comparison results of analysis on the sliding face of the sliding member 301 before and after the projection of the projection particles 311, which are obtained by utilizing an X-ray diffraction analyzer. In each graph shown in Fig. 21, the horizontal axis represents an X-ray incident angle (diffraction angle 2θ) [deg], while the vertical axis represents the number of counts per second (intensity) [cps]. It should be noted that the analytical results, shown in Fig. 21 are obtained by carrying out a thin film X-ray diffraction method, and there is shown information about a compositional structure at a depth of about 5 *µ* m from the surface. A plurality of vertical solid lines, starting from the horizontal axis at the bottom of each of the upper and lower graphs in Fig. 21, each denote the peak position of silica (SiO₂), while a plurality of vertical dotted lines each denote the peak position of mullite (3Al₂O₃·2SiO₂). From these results, it can be seen that the peaks at a diffraction angle 2θ of around 16° and 26° appear after the projection. These can be identified as mullite and silica. Furthermore, although calcium oxide, magnesium oxide and ferric oxide are not detected by X-ray diffraction, it can be determined that calcium oxide, magnesium oxide and ferric oxide exist at the sliding face as amorphous substances since they each exhibit high heat stability.

From the results shown in Figs. 20 and 21, it is possible to determine that the transfer layer 304, in which components of each projection particle 311, i.e., mullite (3Al₂O₃·2SiO₂), silica (SiO₂) and calcium oxide (CaO), have been transferred, is formed at the sliding face of the sliding member 301. Although not shown, the results of the X-ray diffraction analysis, conducted on the compositional structure at a depth of 10 *µ* m or more from the surface, indicate that the peaks of mullite (3Al₂O₃·2SiO₂) and silica (SiO₂) become extremely low. Therefore,' the thickness of the transfer layer 304, containing a large amount of fly ash component, is estimated to be about a few *µ* m.

The frictional wear properties of the sliding member 301, formed by the above-described manufacturing process steps, are evaluated by utilizing a ball-on-disk tester. The test is carried out in the following manner: a stainless steel (SUS304) ball, made of an iron-based material and having a spherical diameter of 9.5 mm and a surface roughness of Ra 0.2 or less, is used as a sliding member (not shown) to be opposed to the sliding member 301; turbine oil is used as lubricating oil; and the test is performed in an atmosphere at a temperature of 22°C to 28°C and at a relative humidity of 55% to 65%. The test condition includes a vertical load of 19.6 N and a sliding velocity of 0.1 m/s. It should be noted that only 0.05 mL of the lubricating oil is dropped before the test, and the lubricating oil is consumed in accordance with an increase in sliding length (sliding distance). In the middle of the test, wear proceeds at a contact sliding portion, and at the point in time when the friction coefficient has reached 0.3 or more, it is determined that the lubricating oil has been depleted and seizing has occurred, thus bringing the test to an end. The above-described condition is defined as Condition 1 of Embodiment 3.

Furthermore, in order to evaluate the frictional wear properties concerning the sliding members of Embodiment 3 according to the present invention, other specifications, in which the shapes and sizes of the projection particles are changed, are also shown in Table 3 below along with the specification of Condition 1 of Embodiment 3. Also in any of the other specifications, an aluminum alloy (A6063) made of an aluminum-based material is used as the base material 302, and a stainless steel (SUS304) ball, made of an iron-based material and having the similar spherical diameter

**Table.3**

| | | EMBODIMENT 3 CONDITION 1 | EMBODIMENT 3 CONDITION 2 | EMBODIMENT 3 CONDITION 3 | COMPARATIVE EXAMPLE 1 |
|---|---|---|---|---|---|
| | BASE MATERIAL | ALUMINUM DIE-CAST | ALUMINUM DIE-CAST | ALUMINUM DIE-CAST | ALUMINUM DIE-CAST |
| | PROCESS | PROCESS STRIATION (No.180) + PROJECTION OF PROJECTION PARTICLE | PROJECTION OF PROJECTION PARTICLE | PROCESS STRIATION (No.180) | LAPPING (Ra0.2) |
| | PARTICLE | FLY ASH | FLY ASH | - | - |
| | COMPONENT | Al₂O₃, SiO₂···70% CaO, MgO, Fe₂O₃···30% | | - | - |
| | PARTICLE DIAMETER [*µ* m] | 7 | 7 | - | - |
| | SHAPE | SPHERICAL | SPHERICAL | - | - |
| | SURFACE STATE AFTER PROCESS | MINUTE GROOVE EXTENDING IN PARALLEL WITH SLIDING DIRECTION + TRANSFER LAYER MINUTE CAVITY | TRANSFER LAYER MINUTE CAVITY | WEDGE-SHAPED CONVEX AND CONCAVE PORTIONS EXTENDING IN PARALLEL WITH SLIDING DIRECTION | - |
| | PARTICLE COMPONENT RATIO IN TRANSFER LAYER (WHICH IS 1 IN CONDITION 1 OF EMBODIMENT 1) | 1 | 1 | - | - |
| | CAVITY DIAMETER [*µ* m] | ~20 | ~20 | - | - |

In Condition 2 of Embodiment 3, a sliding face of a sliding member is ground to a surface roughness of Ra 0.3 *µ* m, and then projection particles are projected onto the sliding face of the sliding member. As the material for the projection particles, approximately spherically shaped fly ash, 70% to 80% of which is occupied by silica (SiO₂), alumina (Al₂O₃) and mullite (3Al2O₃ · 2SiO₂), and the remainder of which is constituted by calcium oxide (CaO), magnesium oxide (MgO), iron oxide and the like, is used. It should be noted that the average particle diameter of the projection particles is 7 *µ* m, and there is shown a normal distribution in which the projection particles, each having a particle diameter of 16 *µ* m at the most, occupy 90% or more of the entire projection particles. At the sliding face of the sliding member, a transfer layer in which the component of fly ash is transferred, and minute cavities, each formed into an approximately hemispherical surface, are provided. It should also be noted that the component ratio detected from the transfer layer is substantially similar to that in Condition 1 of Embodiment 3, and the diameter R of each minute cavity is about 20 *µ* m at the most, which is also similar to that of each minute cavity in Condition 1 of Embodiment 3.

In Condition 3 of Embodiment 3, which is not according to the invention, a grinding process is performed on a sliding face of a sliding member by using No.180 sandpaper so that only process striations, consisting of convex and concave portions each having a wedge-shaped tip, are provided in parallel with the sliding direction.

In Comparative Example 1, a conventional sliding member is ground to a surface roughness of about Ra 0.3 *µ* m to about 0.6 *µ* m, and is then finished to a surface roughness of Ra 0.2 *µ* m or less by lapping.

The test results concerning the frictional wear properties according to the specifications shown in Table 3 will be described below.

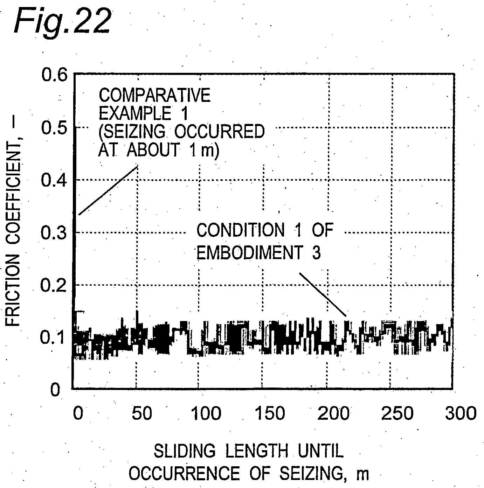

Fig. 22 stows a characteristic graph indicating changes in friction coefficient with time in Condition 1 of Embodiment 3 and in Comparative Example 1. That is to say, shown in this graph are the friction coefficients measured in real time for each sliding length.

The measurement results shown in Fig. 22 indicate the following facts. According to Comparative Example 1 in which the conventional sliding member is used, seizing has occurred promptly at a sliding length of about 1 m. On the other hand, according to Condition 1 of Embodiment 3, the friction coefficient of the sliding member 301 remains at about 0.05 to about 0.2 so as to maintain the sliding at a boundary lubrication region, and therefore seizing does not occur in the range of this test condition (although only the results up to a sliding length of 300 m are shown in Fig. 22, the test is carried out up to a sliding length of 700 m at the most). Accordingly, it is confirmed that the sliding member 301 in Condition 1 of Embodiment 3 is significantly improved in wear resistance and seizing resistance

In Condition 1 of Embodiment 3, due to an impact force resulting from the projection of the projection particles 311, the temperatures at the sliding face of the sliding member 301 and at the surface of each projection particle 311 are instantaneously increased. At this point in time, both of the surfaces are activated, and mullite (3Al₂O₃·2SiO₂), silica (SiO₂) and calcium oxide (CaO), which are components of the projection particles 311, are transferred onto the sliding face. Thus, it is presumed that, in addition to the high mechanical strength properties due to the high hardness, of mullite (3Al₂O₃·2SiO₂) and silica (SiO₂), the property of calcium oxide (CaO) such as the inorganic solid lubrication effect is achieved, thus suppressing the metal contact at the contact sliding portion, and improving the wear resistance at the contact sliding portion compared with the Comparative Example 1.

Further, due to an impact force resulting from the projection of the projection particles 311, the refinement of composition at the surface of the base material 302 is caused to increase the internal stress, and therefore, the mechanical strength and fracture toughness are improved in the sliding member of Condition 1 of Embodiment 3.

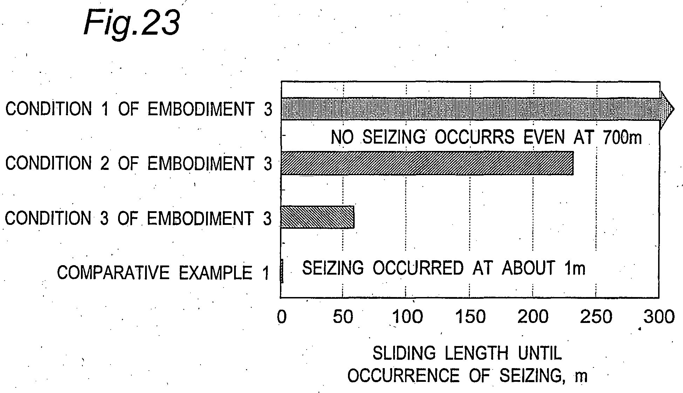

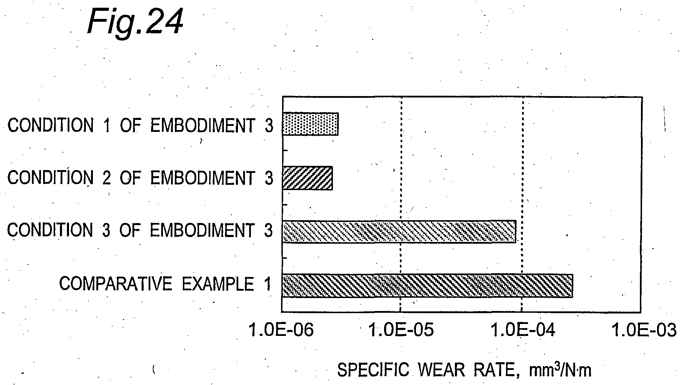

Fig. 23 shows a characteristic graph indicating sliding length until the occurrence of seizing in the sliding members in Conditions 1 to 3 of Embodiment 3 and in Comparative Example 1. That is to say, shown in this graph are results of comparisons made about sliding lengths until the occurrence of seizing for each condition. Fig. 24 shows a characteristic graph indicating specific wear rates in Conditions 1 to 3 of Embodiment 3 and in Comparative Example 1. That is to say, shown in this graph are results of comparisons made about the specific wear rates [mm3/N·m], which are calculated by dividing the wear volume after the test by the sliding length and vertical load for each condition.

Referring to Figs. 23 and 24, as is the case with Condition 1 of Embodiment 3, the seizing resistance and wear resistance in Condition 2 of Embodiment 3, in which only the projection of fly ash is carried out, are significantly improved compared with those in Comparative Example 1. However, although the sliding length until the occurrence of seizing in Condition 1 of Embodiment 3 is 2.5 times or more greater than that in Condition 2 of Embodiment 3, the specific wear rate (i.e., wear volume per unit sliding length) in Condition 1 of Embodiment 3 is almost similar to that in Condition 2 of Embodiment 3.

The reason for this is believed to be as follows. In Condition 1 of Embodiment 3, due to an impact force resulting from the projection of the projection particles 311, plastic deformation occurs in the sliding face to form a large number of the minute cavities 305 at the sliding face, and in addition, the minute grooves 306, consisting of the wedge-shaped concave portions 331 and extending in parallel with the sliding direction, are formed at the sliding face. Therefore', the minute cavities 305 and the minute grooves 306 each function as an oil receiver even in the situation where the oil film thickness is thin, thus synergistically providing the lubrication effect.

Furthermore, in the Condition 3 of Embodiment 3, which is not according to the invention the sliding face is subjected to a grinding process so that minute grooves are provided to extend in parallel with the sliding direction, thereby forming only the process striations consisting of: the convex portions 330, each located on both sides of the minute groove and having a wedge-shaped tip (which is indicated by the imaginary line 330L in Fig. 19); and the concave portions 331. Thus, as shown in Figs. 23 and 24, the effect of improving the sliding length until the occurrence of seizing and the specific wear rate are achieved in the Condition 3 of Embodiment 3, compared with those in Comparative Example 1. However, this effect is relatively small, and this is believed to be due to the fact that the transfer layer 304 and the minute cavities 305 are not formed.

Therefore, in Embodiment 3, the projection particles 311, each composed of approximately spherically shaped fly ash, are projected onto the sliding face of the sliding member 301. Thus, there are provided the transfer layer 304 in which the component of each projection particle 311 is transferred and the composition is dense, and the minute grooves 305, each formed into an approximately hemispherical surface; in addition, the minute grooves 306, extending in parallel with the sliding direction, and the approximately flat portions 312 are alternately formed. Accordingly, the mechanical strength and fracture toughness of the sliding face are improved, and the property such as the inorganic solid lubrication effect is provided. Moreover, in Embodiment 3, since the lubrication effect of a lubricant agent is provided, the wear at the contact sliding portion is synergistically decreased, thus making it possible to provide a highly reliable sliding member and a manufacturing method thereof.

In addition, in the sliding member manufacturing method shown in Embodiment 3 in which the projection particles 311 are projected at high velocity onto the sliding face of the sliding member 301, the material properties, shapes and projecting conditions of the projection particles are adjusted. Thus, it becomes possible to simultaneously form, at the sliding face of the sliding member 301, the transfer layer 304 in which the component of each projection particle 311 is transferred, and a large number of the minute cavities 305, and to modify the surface so that the surface has high wear resistance and high seizing resistance. Therefore, the sliding member manufacturing method according to Embodiment 3 needs no complicated apparatus unlike a PVD or CVD method, and thus can inexpensively fabricate the sliding member.

It should be noted that in the method for manufacturing the sliding member 301 according to Embodiment 3, the sliding face of the sliding member 301 is subjected to a grinding process by using No.180 sandpaper so that minute grooves are provided to extend in parallel with the sliding direction, and then, the projection particles 311 are projected onto the sliding face. However, the process striations caused by, for example, a grinding or rough polishing process, i.e., so-called "remnant grooves", may be used as they are as the minute grooves 306. Such a manufacturing method needs no process of mirror polishing and finishing, thus further improving productivity.

Further, although Embodiment 3 has been described as an example in which the minute grooves 306 are provided to extend in parallel with the sliding direction, the minute grooves 306 may each be formed at an appropriate angle with respect to the sliding direction in accordance with sliding embodiment or condition. Furthermore, the minute grooves 306 may be provided to extend in a direction perpendicular to the sliding direction in accordance with the sliding formations or various conditions.

It should be noted that, according to Embodiment 3, in a direction perpendicular to the sliding direction, the ratio W2/(W1 + W2.) between the width W2 of each minute groove 306 and the width W1 of each approximately flat portion 312 is in the range between about 0.05 and about 0.6 although it varies with location. If the ratio W2/ (W1 + W2) is less than 0.05, the advantages over the case where only the minute cavities 305 are substantially formed are reduced. On the other hand, if the ratio W2/ (W1 + W2) is equal to or more than 0.6, it is expected that the width W2 of each minute groove 306 and the depth H2 of each concave portion 331 become inevitably too large, thus causing lubricating oil to flow out of the contact sliding portion, and decreasing the wear reducing effect. Accordingly, the ratio W2/ (W1 + W2) between the width W2 of each minute groove 306 and the width W1 of each approximately flat portion 312 is preferably in the range between about 0.05 and about 0.6.

### Embodiment 4

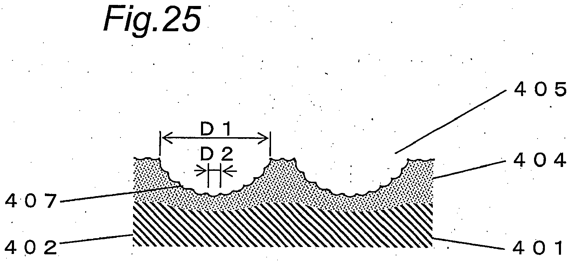

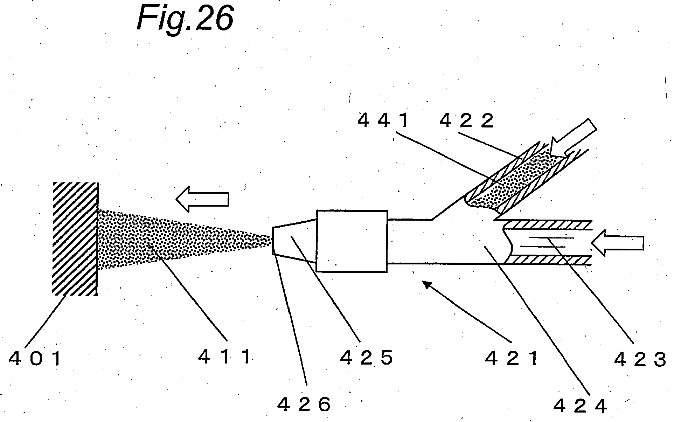

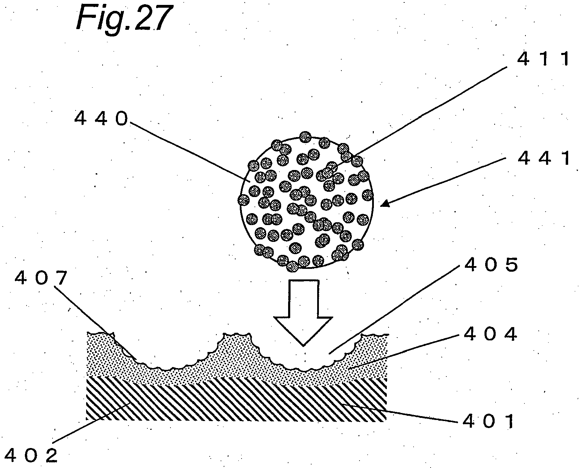

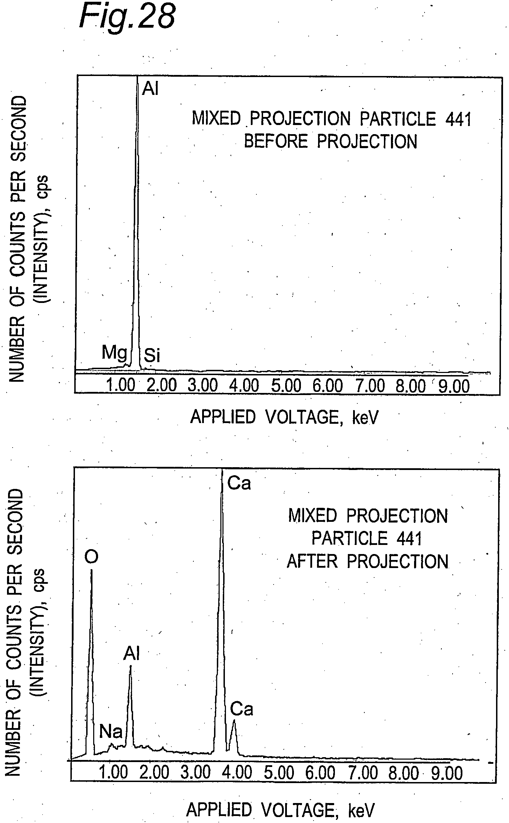

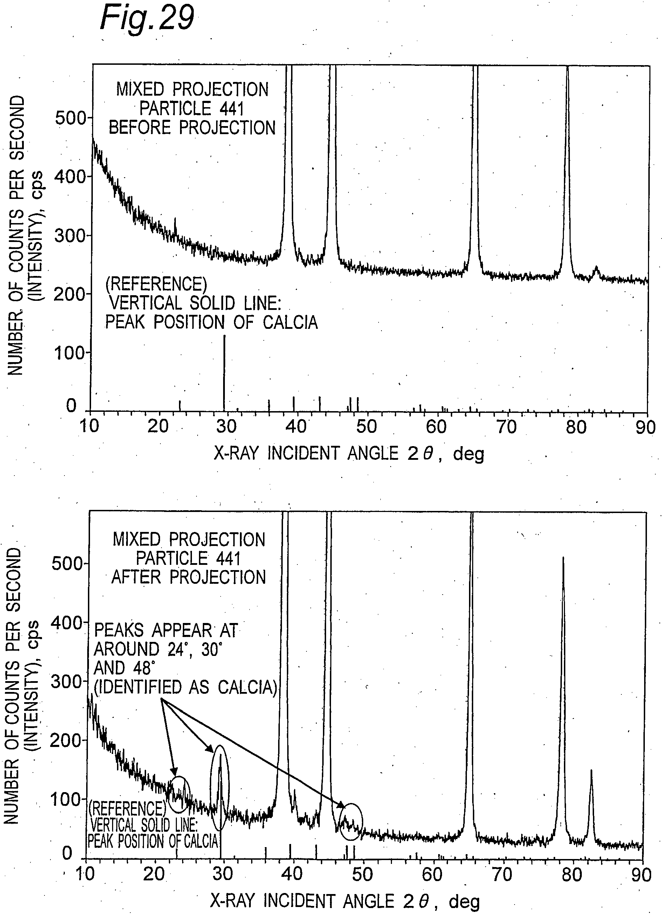

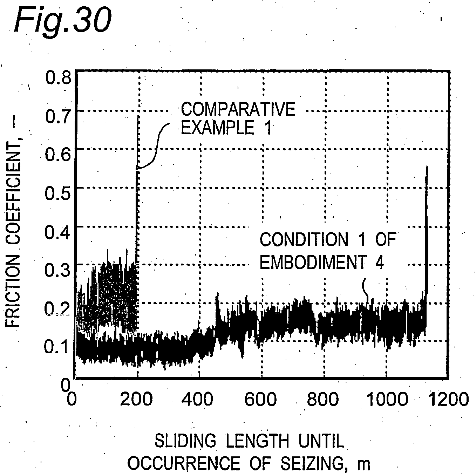

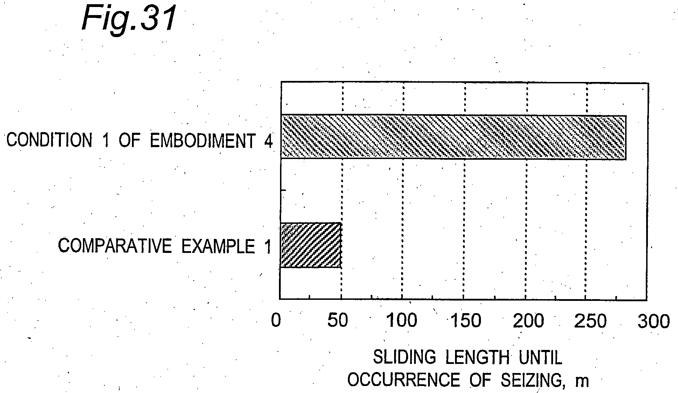

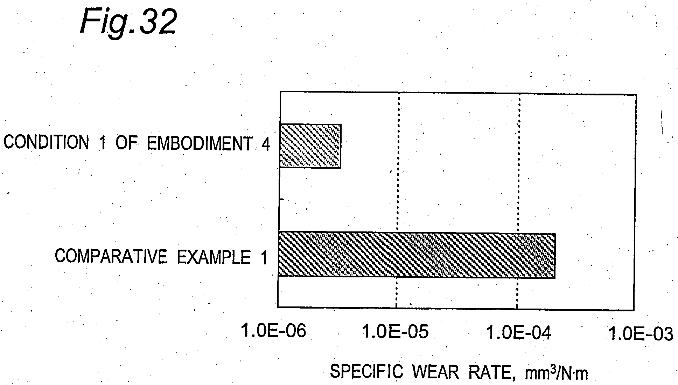

Fig. 25 shows an enlarged schematic cross-sectional view partially illustrating a sliding member in Embodiment 4 according to the present invention. Fig. 26 shows a schematic view illustrating a method for manufacturing the sliding member in Embodiment 4. Fig. 27 shows a schematic view illustrating a mixed projection particle in Embodiment 4. Fig. 28 shows characteristic graphs indicating results of EPMA elemental analysis on a sliding face of the sliding member of Embodiment 4. Fig. 29 shows characteristic graphs indicating results of X-ray diffraction analysis on the sliding face of the sliding member of Embodiment 4. Fig. 30 shows a characteristic graph indicating changes in friction coefficient with time in Embodiment 4. Fig. 31 shows a characteristic graph indicating sliding length until the occurrence of seizing in Embodiment 4. And Fig. 32 shows a characteristic graph indicating disk-side specific wear rate in Embodiment 4.

First, a method for manufacturing a sliding member 401 of Embodiment 4 according to the present invention will be described in detail.

The sliding member 401 is formed using, as a base material 402, an aluminum alloy (JIS: A6063) made of an aluminum-based material. A sliding face of the sliding member 401 is subjected to a grinding process in advance so as to be finished to a surface roughness of about Ra 0.3 *µ*m. Then, a projection particle supply device 421 (see Fig. 26) is used to project mixed projection particles 441 (see Fig. 27), in which projection particles 411 and carrier beads 440 are mixed, onto the surface of the base material 402.

In the projection particle supply device 421, a projection particle transport pipe 422 transporting the mixed projection particles 441 stored in a storage tank (not shown), is connected with a gas pipe 424 flowing a carrier gas 423, and a nozzle 425 is disposed at a tip of the gas pipe 424.

In this embodiment, as the material for the projection particles 411, high-purity calcium oxide containing 99% or more of calcium oxide (CaO) component is used. The projection particles 411 are each formed to have a plurality of round convex portions at its circumferential face, and have an average particle diameter of 1 *µ*m or less.

As the material for carrier beads 440, silica (SiO₂), having a high purity of 99% or more and formed into an approximately spherical shape, is used. The average particle diameter of the carrier beads 440 is 20 *µ*m, and there is shown a normal distribution in which the carrier beads 440, each having a particle diameter ranging from 10 *µ*m to 30 *µ*m, occupy 90% or more of the entire carrier beads 440.

The projection particles 411 and the carrier beads 440 are supposed to be mixed at a volume ratio of 1:3, and are put into a predetermined container in which the projection particles 411 and the carrier beads 440 are mixed for about an hour using a planetary ball mill, thereby producing the mixed projection particles 441.

The present inventors confirmed that, in the mixed projection particles 441, a large number of the projection particles 411 are attached to the spherical surface of each carrier bead 440 due to static electricity and the like, as shown in Fig. 27.

The mixed projection particles 441, stored in the storage tank, are allowed to pass through the projection particle transport pipe 422 by means of an electric gear pump (not shown), and are transported to a connection between the projection particle transport pipe 422 and the gas pipe 424. The carrier gas 423 inside the gas pipe 424 is a dry air provided by utilizing an air pump (not shown), and the gas pressure is adjusted so as to be in the range between 0.3 MPa and 0.6 Mpa.

The mixed projection particles 441, continuously transported to the connection between the gas pipe 424 and the projection particle transport pipe 422 in this manner, are projected approximately perpendicularly to the sliding face of the sliding member 401 through a tip outlet 426 of the nozzle 425 at a velocity of about 100 m/s by means of the carrier gas 423. It should be noted that the distance between the tip outlet 426 of the nozzle 425 and the sliding face of the sliding member 401 is in the range between 30 mm and 40 mm.

The sliding member 401 of Embodiment 4 fabricated by the above-described sliding member manufacturing method will be described in detail below.

At the sliding face of the sliding member 401, a transfer layer 404, in which calcium oxide (CaO) is transferred to a thickness of about a few *µ*m as the principal component, is formed on the base material 402 made of an aluminum alloy (JIS: A6063). As used herein, the term "transfer" means a process of causing components of the projection particles 411 and the carrier beads 440 to be adhered and interfused to a surface of the base material 402 and the vicinity of the surface. In this embodiment, the transfer is realized by projecting, the projection particles 411, having components which are desired to be transferred, onto the sliding face of the sliding member 401 at a predetermined velocity.

At the sliding face of the sliding member 401, a large number of minute cavities 405, each having an approximately hemispherical surface, are distributed, and these minute cavities 405 are believed to be formed mainly due to the carrier beads 440. Furthermore, at an inner surface of each minute cavity 405 and at the surface of the sliding face, a large number of extremely minute concaves 407, each having a smaller diameter, are formed, and these extremely minute concaves 407 are believed to be formed mainly due to the projection particles 411.

The diameter D1 of each minute cavity 405 (i.e., sliding face opening diameter) is about 30 *µ*m at the most from shape measurement results. On the other hand, the diameter D2 of each extremely minute concave 407 is about 1 *µ*m at the most. As used herein, "sliding face opening diameter" means the diameter of an approximately circular opening at a flat sliding face.

Results of analysis on the surface of the sliding member 401 of Embodiment 4, fabricated as described above, will be described in detail with reference to Figs. 28 and 29.

Fig. 28 shows graphs indicating comparison results of analysis on the sliding face of the sliding member 401 before and after the projection of the mixed projection particles 441, which are obtained by utilizing an EPMA analyzer. In each graph shown in Fig. 28, the horizontal axis represents an applied voltage [keV], while the vertical axis represents the number of counts per second (intensity), [cps]. It should be noted that the analytical results shown in Fig. 28 are obtained under the analytical condition in which the applied voltage is 15 keV at the most, and there is shown information about elements existing at a depth of 2 *µ*m to 4 *µ*m from the surface.

From these analytical results, it can be seen that the peaks of oxygen (O) and calcium (Ca), which are constituent elements of the projection particles 411, after the projection are significantly higher than those of oxygen (O) and calcium (Ca) before the projection; on the other hand, the peak of aluminum (A1), which is a constituent element of the base material 402, after the projection is significantly lower than that of aluminum (A1) before the projection. Further, although slightly, the peak of natrium (Na) is also detected after the projection. Based on the above facts, it can be seen that a portion of the sliding member 401 at a depth of 2 *µ*m to 4 *µ*m from the surface is composed mainly of calcium and oxygen after the projection.

Fig. 29 shows comparison results of analysis on the sliding face of the sliding member 401 before and after the projection of the mixed projection particles 441, which are' obtained by utilizing an X-ray diffraction analyzer. In each graph shown in Fig. 29, the horizontal axis represents an X-ray incident angle (diffraction angle 2θ) [deg], while the vertical axis represents the number of counts per second (intensity) [cps]. It should be noted that the analytical results shown in Fig. 29 are obtained by carrying out a thin film X-ray diffraction method, and there is shown information about a compositional structure at a depth of about *µ*m from the surface. A plurality of vertical solid lines, starting from the horizontal axis at the bottom of each of the upper and lower graphs in Fig. 29, each denote the'peak position of CaO-calcium oxide. From these analytical results, it can be seen that the peaks at a diffraction angle 2θ of around 24°, 30° and 48° appear after the projection. Based on these results, CaO-calcium oxide can be presumed to exist at the surface.

From the results shown in Figs. 28 and 29, it is possible to determine that the transfer layer 404 in which calcium oxide (CaO), i.e., the principal component of each projection particle 411, is transferred is formed at the sliding face of the sliding member 401. Also, the thickness of the transfer layer 404 can be presumed to be about 3 *µ*m to 4 *µ*m.

Although silica (SiO₂), which is the component of the carrier beads 440, is not detected from the results shown in Figs. 28 and 29, it is natural to think that silica (SiO₂) component is also slightly transferred.

Next, the frictional wear properties of the sliding member 401, formed in the above-described manner, are evaluated by utilizing a ring-on-disk type tester as described in detail below.

The sliding member 401 is placed as a disk, and a ring, formed by an aluminum alloy (A6063) made of an aluminum-based material, is used as an opposing sliding member (not shown), a sliding face of which has an inner diameter of 38 mm, an outer diameter of 40 mm and a surface roughness of Ra 0.2 *µ*m or less.
The test condition includes, in an atmosphere at a temperature of 22 °C to 28 °C and at a. relative humidity of 55% to 65%, a vertical load of 49 N and a sliding velocity of 0.47 m/s.

Turbine oil is used as lubricating oil. Only 0.007 mL of the lubricating oil is dropped before the test, and the lubricating oil is consumed in accordance with an increase in sliding length (sliding distance). In the middle of the test, wear proceeds at a contact sliding portion, and at the point in time when the friction coefficient has reached 0.3 or more, it is determined that the lubricating oil has been depleted and seizing has occurred, thus bringing the test to an end. The above-described condition is shown in Table 4 below as Condition 1 of Embodiment 4.

**Table.4**

| | | | EMBODIMENT 4 CONDITION 1 | COMPARATIVE EXAMPLE 1 |
|---|---|---|---|---|
| DISK BASE MATERIAL | | | ALUMINUM ALLOY (A6063) | ALUMINUM DIE-CAST |
| | | PROCESS | PROJECTION OF MIXED PROJECTION PARTICLE | ONLY LAPPING (Ra0.2) |
| | | PROJECTION PARTICLE | Calsium Oxide | - |
| | | COMPONENT | CaO···99% OR MORE | - |
| | | PARTICLE DIAMETER [µm] | LESS THAN 1 | - |
| | | SHAPE | HAVING PLURAL ROUND CONVEX PORTIONS | - |
| | | CARRIER BEADS | SILICA | - |
| | | COMPONENT | SiO₂ | - |
| | | PARTICLE DIAMETER [µm] | 20 | - |
| | | SHAPE | SPHERICAL | - |
| | | SURFACE STATE AFTER PROCESS | TRANSFER LAYER MINUTE CAVITY EXTREMELY MINUTE CONCAVE | SMOOTH SURFACE |
| | | CAVITY DIAMETER [µm] | ∼30 | - |

| | | | | |
|---|---|---|---|---|
| 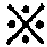 OPPOSING SLIDING MEMBER: RING FORMED BY ALUMINUM ALLOY (A6063) | | | | |

In Comparative Example 1, a conventional sliding member is ground to have a surface roughness of the order of Ra 0.3 *µ*m to 0.6 *µ*m, and is then finished to a surface roughness of Ra 0.2 *µ*m or less by lapping.

The test results concerning the frictional wear properties according to the specifications shown in Table 4 will be described below.

Fig. 30 shows a characteristic graph indicating changes in friction coefficient with time in Condition 1 of Embodiment 4 according to the present invention and in Comparative Example 1. That is to say, shown in this graph are the friction coefficients measured in real time for each sliding length. Fig. 31 shows a characteristic graph concerning sliding length until the occurrence of seizing in the sliding members in Condition 1 of Embodiment 4 and in Comparative Example 1. That is to say, shown in this graph are results of comparisons made about sliding lengths until the occurrence of seizing for each condition. And Fig. 32 shows a characteristic graph indicating disk-side specific wear rates in Condition 1 of Embodiment 4 and in Comparative Example 1. That is to say, shown in this graph are results of comparisons made about the specific wear rates [mm3/N·m], which, are calculated by dividing the wear volume after the test by the sliding length and vertical load for each condition.

The results shown in Figs. 30 and 31 indicate the following facts. In Comparative Example 1, seizing has occurred promptly at a sliding length of about 200 m. On the other hand, In Condition 1 of Embodiment 4, the friction coefficient of the sliding member 401 remains at about 0.05 to about 0.2 so as to maintain the sliding at a boundary lubrication region, and the sliding distance until the occurrence of seizing in Condition 1 of Embodiment 4 is about 6 times greater than that in Comparative Example 1. Furthermore, the results shown in Fig. 32 indicate that the specific wear rate of the sliding member 401 in Condition 1 of Embodiment 4 is about 1/100 of that of the conventional sliding member in Comparative Example 1, although the sliding length until the occurrence of seizing in Condition 1 of Embodiment 4 is about 6 times as much as that in Comparative Example 1.

From these results, it can be confirmed that the sliding member 401 in Condition 1 of Embodiment 4 is significantly improved in the wear resistance and the seizing resistance. The reason for this is presumed to be as follows. The transfer layer 404, formed at the surface of the sliding member 401 and composed mainly of calcium oxide (CaO), functions as a self-lubricating material, and in addition, the minute cavities 405 and the extremely minute concaves 407, formed along with the transfer layer-404, each function as an oil receiver for supplying and retaining lubricating oil for the contact sliding portion. Therefore, even in the situation where the supply of lubricating oil from outside is interrupted, it is possible to maintain the wear resistance and seizing resistance of the sliding face of the sliding member 401 in Condition 1 of Embodiment 4. In addition, in the sliding member 401 in Condition 1 of Embodiment 4, the composition of the base material 402 located directly below the transfer layer 404 becomes dense due to the projection of the mixed projection particles 441, thus improving the mechanical strength.

The average particle diameter of calcium oxide used in Embodiment 4 is about 1 *µ*m and thus its own weight is light. Therefore, in order to achieve a collision energy required for the transfer of components onto the sliding face and the formation of the minute cavities 405 by sorely using calcium oxide, it is necessary to project the projection particles 411 at a very high pressure (high velocity) in view of the impulse relationship.

Embodiment 4 uses such small-diameter projection particles 411 mixed with the relatively large diameter carrier beads 440 having an average particle diameter of 20 *µ*m. The carrier beads 440 in Embodiment 4 each have the function of transporting the projection particles 411 to the sliding face, and the function of providing the sliding face with a collision energy required for the transfer of the components of the projection particles 411 onto the sliding face, the formation of the minute cavities 405, and the formation of the extremely minute concaves 407 even at a relatively low pressure (velocity).

In Embodiment 4, the mixed projection particles 441 are collided against the sliding face of the sliding member 401, thereby causing the large-diameter carrier beads 440 to provide a collision energy. Thus, the temperatures at the sliding face and at the surface of each mixed projection particle 441 are instantaneously increased, resulting in the surface activation required for the transfer. At this time, the components of the projection particles 411, attached to the surfaces of the carrier beads 440, are transferred onto the sliding face of the sliding member 401. Further, at the time of collision of the mixed projection particles 441, the relatively small diameter projection particles 411 are pushed into the sliding face by the large-diameter carrier beads 440, thus facilitating the transfer of components of the projection particles 411.

Furthermore, as shown in Fig. 27, the mixed projection particles 441, in which a large number of the projection particles 411 are attached to the surfaces of the carrier beads 440, are projected onto the sliding face, thus making it possible to efficiently form the minute cavities 405 and the extremely minute concaves 407 at the sliding face of the sliding member 401.

Since the extremely minute concaves 407 each serve as a connection, i.e., so-called "wedge", between lubricating oil and the sliding face, the retention and absorption of the lubricating oil stored in the minute cavities 405 are improved, thereby suppressing the depletion of the lubricating oil between contact sliding portions during sliding.

Thus, in Embodiment 4, the projection of the mixed projection particles 441 onto the sliding face of the sliding member 401 makes it possible to form the transfer layer 404 in which the components of the projection particles 411 and the carrier beads 440 are transferred, and to cause the composition of the base material 402, located directly below the transfer layer 404, to become dense. Furthermore, in Embodiment 4, since the minute cavities 405, each formed into an approximately hemispherical surface, and the extremely minute concaves 407 are provided, the mechanical strength and fracture toughness of the sliding face are increased, and in addition to the inorganic solid lubrication effect, the effect of retaining the lubricating oil between the contact sliding portions is provided. As a result, the sliding member manufacturing method according to Embodiment 4 can suppress the wear and seizing at the contact sliding portion, and thus can provide a highly reliable sliding member.

In addition, in the sliding member manufacturing method in which such mixed projection particles 441 are projected at high velocity onto the sliding face of the sliding member 401, the material properties, shapes and projecting conditions of the projection particles are adjusted. Thus, it becomes possible to simultaneously form, at the sliding face of the sliding member 401, the transfer layer 404 in which the component of each projection particle is transferred, and a large number of the minute cavities 405, and to modify the surface so that the surface has high wear resistance and high seizing resistance. Therefore, the sliding member manufacturing method according to Embodiment 4 needs no complicated apparatus unlike a PVD or CVD method, and thus can inexpensively fabricate the sliding member.

Although calcium oxide is used as the material for the projection particles 411 in the sliding member manufacturing method according to Embodiment 4, the similar effects can be obtained even if calcium lime is alternatively used.

In the sliding member manufacturing method according to Embodiment 4, calcium oxide having an average particle diameter of 1 *µ*m or less is used as the material for the projection particles 411. Therefore, the carrier beads 440 having an average particle diameter of 20 *µ*m and the projection particles 411 are mixed and projected onto the sliding face in order to provide the sliding face with the collision energy required for the transfer of components of the projection particles 411 onto the sliding face and the formation of the minute cavities 405 and the extremely minute concaves 407 even at a relatively low pressure (low velocity) projecting condition. However, in the case where the average particle diameter of the projection particles 411 composed mainly of calcium oxide (CaO) is 3 *µ*m to 200 *µ* m, the similar effects are obtainable even if the projection particles 411 are solely projected onto the sliding face without mixing the projection particles 411 with the carrier beads 440 having different material property.

In Embodiment 4, the diameter D1 of each minute cavity 405, which is believed to be formed mainly due to the carrier beads 440, is about 30 *µ*m at the most from shape measurement results. According to the results of the wear test conducted by the present inventors, it is confirmed that if the maximum value of the diameter D1 of each minute cavity 405 is in the range between 30 *µ*m and 90 *µm,* the sliding length until the occurrence of seizing reaches the maximal value, and the specific wear rate reaches the minimal value. This is believed to be due to the fact that if the diameter D1 of each minute cavity 405 becomes excessively larger than 90 *µ*m, the adjacent minute cavities 405 are connected together to cause lubricating oil to flow out of the minute cavities 405, which makes it hard to achieve the lubrication effect, thus causing the occurrence of seizing relatively quickly. On the other hand, if the diameter D1 of each minute cavity 405 becomes excessively smaller than 30 *µ*m, the surface shape of the sliding member becomes substantially similar to a conventional smooth surface shape, thus making it impossible to retain the lubricating oil.

Therefore, in order to improve the seizing resistance and wear resistance compared with those of the conventional sliding member, the maximum value of the diameter D1 of each minute cavity 405 is preferably in the range between 10 *µ*m and 200 *µ*m. In order to further improve the seizing resistance and wear resistance, the maximum value of the diameter D1 of each minute cavity 405 is more preferably in the range between 30 *µ*m and 90 *µ*m.

In accordance with the appropriate maximum value of the diameter D1 of each minute cavity 405 as described above the average particle diameter of the carrier beads 440 is preferably in the range between 3 *µ*m and 200 *µ*m if the mixed projection particles are projected as in Embodiment 4, and the average particle diameter of the projection particles 411 is preferably in the range between 3 *µ*m and 200 *µ*m if the projection particles are solely projected. Furthermore, in order to drastically improve the seizing resistance and wear resistance, the average particle diameter of the carrier beads 440 or the projection particles 411 is more preferably in the range between 15 *µ*m and 80 *µ*m.

Although silica (SiO₂), having a high purity of 99% or more and formed into an approximately spherical shape, is used as the material for the carrier beads 440 in Embodiment 4, the similar effects are obtainable even if other beads having hardness (e.g., Mohs hardness) equal to or more than that of silica (SiO₂) and high mechanical strength properties are used.

Moreover, as for the shapes of the carrier beads 440, the formation of the transfer layer 404 having the components of the projection particles 411 is confirmed at the sliding face even if approximately angularly shaped beads are used. However, if the angularly shaped particles having an average particle diameter of 100 *µ*m are projected onto the sliding face, the maximum value of the diameter D1 of each minute cavity 405 does not even reach 10 *µ*m, and thus the minute cavities 405 are each unable to sufficiently function as an oil receiver for supplying and retaining lubricating oil for the contact sliding portion. As a result, the angularly shaped carrier beads 440 cause the wear of the contact sliding portion to proceed quickly compared with the spherically shaped particles, which might result in the occurrence of seizing at the contact sliding portion. Accordingly, if the carrier beads 440 are used in the case where the mixed projection particles are projected as in Embodiment 4, or if the projection particles are solely projected, the carrier beads 440 or the projection particles 411 are more preferably spherically shaped.

In the sliding member manufacturing method according to Embodiment 4, the mixed projection particles 441 are projected onto the sliding face of the sliding member' 401 through the tip outlet 426 of the nozzle 425 at a velocity of about 100 m/sec by means of the carrier gas 423. However, if the projection velocity is too low, a sufficient impact energy cannot be transmitted to the base material 402 at the time of collision, resulting in insufficient formation of the transfer layer 404, the minute cavities 405 and the extremely minute concaves 407. On the other hand, the present inventors confirmed that if the projection velocity is too high, the roughness of the sliding face of the sliding member 401 significantly appears. Accordingly, the projection velocity is preferably appropriately selected in accordance with, for example, the following factors: the material property (e.g., hardness) of the base material 402; the material property (e.g., hardness) of each projection particle 411; the particle diameter of each projection particle 411; the material property (e.g., hardness) of each carrier bead 440; the particle diameter of each carrier bead 440; the required surface roughness of the sliding face after the projection; the shape of each minute cavity 405 to be formed; and/or the shape of each extremely minute concave 407 to be formed.

Embodiment 4 has been described as an example in which the projection particle supply device 421 is used to transport the mixed projection particles 441 by means of a gear pump (not shown), and to project the mixed projection particles 441 onto the sliding member 401 by mingling the mixed projection particles 441 with the carrier gas 423. Alternatively, any other structure may be used as long as the mixed projection particles 441 are stably supplied, and are projected onto the sliding member 401 with a necessary energy.

Moreover, although air, which is an incompressible fluid, is used as the carrier gas 423 in Embodiment 4, the similar effects can be obtained even if a nitrogen gas containing no oxygen is used.

### Industrial Applicability

An inventive sliding member is inexpensive and is highly reliable, and therefore, the inventive sliding member can be applied to sliding portions of various industrial equipments in which lubricating oil is used.

## Claims

1. A sliding member comprising a transfer layer (104, 204, 304, 404), which is formed at a sliding face of the sliding member (101, 201, 301, 401) by projecting, onto a base material of the sliding member, projection particles containing at least one component selected from the group consisting of alumina, silica, mullite, calcium oxide, magnesium oxide and iron oxide and causing a component of each projection particle to be adhered and interfused to the surface of the base material, wherein, due to an impact force,
a large number of minute cavities (105, 205, 305, 405) are formed, each formed by a part of a substantially spherical surface, which are provided at the sliding face of the sliding member, and
wherein
a minute groove is formed at the sliding face of the sliding member.

2. The sliding member according to claim 1, wherein a maximum diameter of each minute cavity at a sliding face opening is in the range between 1 *µ*m and 200 *µ*m.

3. The sliding member according to claim 1, wherein the base material of the sliding member is made of an aluminium-based material.

4. The sliding member according to claim 1, wherein the base material of the sliding member is made of an iron-based material.

5. The sliding member according to claim 1, wherein the minute groove extends in a direction that forms a predetermined angle with respect to a sliding direction.

6. The sliding member according to claim 1, wherein the minute groove extends in a direction in parallel with a sliding direction.

7. The sliding member according to claim 1, wherein the minute groove extends in mutually perpendicular directions.

8. The sliding member according to claim 1, wherein the ratio between the width of the minute groove and the length of the sliding face along a direction perpendicular to an extending direction of the minute groove is in the range between 0.05 and 0.6.

9. The sliding member according to claim 1, wherein an extremely minute concave having a maximum diameter of 3 *µ*m or less is formed at an inner face of each minute cavity.

10. A sliding member manufacturing method for forming a transfer layer (104, 204, 304 , 404) at a sliding face of the sliding member (101, 201, 301, 401),
the method comprising the step of forming the transfer layer by projecting, onto a base material of the sliding member, projection particles containing at least one component selected from the group consisting of alumina, silica, mullite, calcium oxide, magnesium oxide and iron oxide and causing a component of each projection particle to be adhered and interfused to the surface of the base material, wherein
in the step of forming the transfer layer, a large number of minute cavities (105, 205, 305, 405) each formed by a part of a substantially spherical surface, are provided at the sliding face of the sliding member.

11. The sliding member manufacturing method according to claim 10, wherein the projection particle is substantially spherically shaped, and has an average particle diameter in the range between 3 *µ*m and 200 *µ*m.

12. The sliding member manufacturing method according to claim 10 or 11, wherein fly ash is used as the projection particle.

13. The sliding member manufacturing method according to claim 10 or 11, wherein
the method further comprises, prior to the step of forming the transfer layer, a grinding step for forming a minute groove at a face of the base material which is to be the sliding face.

14. The sliding member manufacturing method according to claim 10 or 11, wherein
the method further comprises, prior to the step of forming the transfer layer, a grinding step for forming a minute groove at a face of the base material which is to be the sliding face, and wherein the minute groove formed in the grinding step extends in a direction that forms a predetermined angle with respect to a sliding direction.

15. The sliding member manufacturing method according to claim 10 or 11, wherein
in the step of forming the transfer layer, a minute cavity, whose maximum diameter at a sliding face opening is in the range between 10 *µ*m and 200 *µ*m, is formed.

16. The sliding member manufacturing method according to claim 10 or 11, wherein
in the step of forming the transfer layer, an extremely minute concave having a maximum diameter of 3 *µ*m or less is formed at an inner face of a minute cavity.

17. The sliding member manufacturing method according to claim 10, wherein the transfer layer is formed by projecting, onto the base material, a mixed projection particle in which the projection particle having a particle diameter of 1 *µ*m or less is mixed with a carrier bead having a substantially spherical shape and having an average particle diameter in the range between 3 *µ* and 200 *µ*m.

18. The sliding member manufacturing method according to claim 17, wherein the mixed projection particle is formed in such a manner that a large number of the projection particles are attached to a surface of the carrier bead.

19. The sliding member manufacturing method according to any one of claim 10 or 11, wherein at least one of calcium oxide and calcium lime is used as the projection particle.

## Patentansprüche

1. Gleitelement, umfassend eine Übertragungsschicht (104, 204, 304, 404), die aufgebracht ist auf einer Gleitfläche des Gleitelements (101, 201, 301, 401) durch ein Aufsprühen von Sprühpartikeln auf ein Grundmaterial des Gleitelements, die mindestens eine Komponente enthalten, gewählt aus der aus Aluminiumoxid, Mullit, Kalziumoxid, Magnesiumoxid und Eisenoxid bestehenden Gruppe, und durch ein Bewirken, dass eine Komponente jedes Sprühpartikels an der Oberfläche des Grundmaterials haftet und sich damit vermischt, wobei aufgrund einer Aufprallkraft
eine große Anzahl winziger Vertiefungen (105, 205, 305, 405), jeweils durch einen Teil einer im Wesentlichen sphärischen Fläche gebildet, ausgebildet wird, die an der Gleitfläche des Gleitelements vorgesehen werden, und
wobei
eine winzige Nut an der Gleitfläche des Gleitelements ausgebildet wird.

2. Gleitelement nach Anspruch 1, wobei ein maximaler Durchmesser jeder winzigen Vertiefung an einer Gleitflächenöffnung im Bereich zwischen 10 µm und 200 µm liegt.

3. Gleitelement nach Anspruch 1, wobei das Grundmaterial des Gleitelements aus einem aluminiumbasierten Material besteht.

4. Gleitelement nach Anspruch 1, wobei das Grundmaterial des Gleitelements aus einem eisenbasierten Material besteht.

5. Gleitelement nach Anspruch 1, wobei sich die winzige Nut in einer Richtung erstreckt, die einen vorgegebenen Winkel bezüglich einer Gleitrichtung bildet.

6. Gleitelement nach Anspruch 1, wobei sich die winzige Nut in einer Richtung parallel zu einer Gleitrichtung erstreckt.

7. Gleitelement nach Anspruch 1, wobei sich die winzige Nut in zueinander senkrechten Richtungen erstreckt.

8. Gleitelement nach Anspruch 1, wobei das Verhältnis zwischen der Breite der winzigen Nut und der Länge der Gleitfläche entlang einer Richtung senkrecht zu einer Erstreckungsrichtung der winzigen Nut im Bereich zwischen 0,05 und 0,6 liegt.

9. Gleitelement nach Anspruch 1, wobei eine extrem winzige Höhlung mit einem maximalen Durchmesser von 3 µm oder weniger an einer Innenfläche jeder winzigen Vertiefung ausgebildet ist.

10. Gleitelement-Herstellungsverfahren zum Ausbilden einer Übertragungsschicht (104, 204, 304, 404) an einer Gleitfläche des Gleitelements (101, 201, 301, 401),
wobei das Verfahren den Schritt des Ausbildens der Übertragungsschicht durch ein Aufsprühen auf ein Grundmaterial des Gleitelements von Sprühpartikeln, die mindestens eine Komponente enthalten, gewählt aus der aus Aluminiumoxid, Mullit, Kalziumoxid, Magnesiumoxid und Eisenoxid bestehenden Gruppe, und des Bewirkens umfasst, dass eine Komponente jedes Sprühpartikels an der Oberfläche des Grundmaterials haftet und sich vermischt, wobei im Schritt des Ausbildens der Übertragungsschicht eine große Anzahl winziger Höhlungen (105, 205, 305, 405), jeweils durch einen Teil einer im Wesentlichen sphärischen Fläche gebildet, an der Gleitfläche des Gleitelements vorgesehen wird.

11. Gleitelement-Herstellungsverfahren nach Anspruch 10, wobei das Sprühpartikel im Wesentlichen sphärisch geformt ist und einen durchschnittlichen Partikeldurchmesser im Bereich zwischen 3 µm und 200 µm aufweist.

12. Gleitelement-Herstellungsverfahren nach Anspruch 10 oder 11, wobei Flugasche als das Sprühpartikel verwendet wird.

13. Gleitelement-Herstellungsverfahren nach Anspruch 10 oder 11, wobei das Verfahren weiter vor dem Schritt des Ausbildens der Übertragungsschicht einen Schleifschritt zum Ausbilden einer winzigen Nut auf einer Fläche des Grundmaterials umfasst, die die Gleitfläche werden soll.

14. Gleitelement-Herstellungsverfahren nach Anspruch 10 oder 11, wobei das Verfahren weiter vor dem Schritt des Ausbildens der Übertragungsschicht einen Schleifschritt zum Ausbilden einer winzigen Nut auf einer Fläche des Grundmaterials umfasst, die die Gleitfläche werden soll, und wobei sich die im Schleifschritt ausgebildete winzige Nut in einer Richtung erstreckt, die einen vorgegebenen Winkel bezüglich einer Gleitrichtung bildet.

15. Gleitelement-Herstellungsverfahren nach Anspruch 10 oder 11, wobei im Schritt des Ausbildens der Übertragungsschicht eine winzige Vertiefung ausgebildet wird, deren maximaler Durchmesser an einer Gleitflächenöffnung im Bereich zwischen 10 µm und 200 µm liegt.

16. Gleitelement-Herstellungsverfahren nach Anspruch 10 oder 11, wobei im Schritt des Ausbildens der Übertragungsschicht eine extrem winzige Höhlung mit einem maximalen Durchmesser von 3 µm oder weniger an einer Innenfläche jeder winzigen Vertiefung ausgebildet wird.

17. Gleitelement-Herstellungsverfahren nach Anspruch 10, wobei die Übertragungsschicht ausgebildet wird durch ein Aufsprühen auf das Grundmaterial eines gemischten Sprühpartikels, bei dem der Sprühpartikel mit einem Partikeldurchmesser von 1 µm oder weniger mit einem Trägerkügelchen mit einer im Wesentlichen sphärischen Form und einem durchschnittlichen Partikeldurchmesser im Bereich zwischen 3 µm und 200 µm gemischt ist.

18. Gleitelement-Herstellungsverfahren nach Anspruch 17, wobei das gemischte Sprühpartikel so ausgebildet ist, dass eine große Anzahl der Sprühpartikel an einer Oberfläche des Trägerkügelchens angebracht ist.

19. Gleitelement-Herstellungsverfahren nach einem beliebigen der Ansprüche 10 oder 11, wobei mindestens eins aus Kalziumoxid und Kalk als das Sprühpartikel verwendet wird.

## Revendications

1. Élément glissant comportant une couche de transfert (104, 204, 304, 404), qui est formée sur une face de glissement de l'élément glissant (101, 201, 301, 401) en projetant, sur une matière de base de l'élément glissant, des particules de projection contenant au moins un composant sélectionné dans le groupe comprenant l'alumine, la silice, la mullite, l'oxyde de calcium, l'oxyde de magnésium et l'oxyde de fer et en faisant à ce qu'un composant de chaque particule de projection adhère et se fonde dans la matière de base, dans lequel, en raison d'une force d'impact,
un grand nombre de cavités minuscules (105, 205, 305, 405) sont formées, chacune étant formée par une partie d'une surface substantiellement sphérique, qui sont fournies sur la face de glissement de l'élément glissant, et dans lequel
un creux minuscule est formé sur la face de glissement de l'élément glissant.

2. Élément glissant selon la revendication 1, dans lequel un diamètre maximal de chaque cavité minuscule sur une ouverture de face de glissement se situe dans la plage de 10 µm à 200 µm.

3. Élément glissant selon la revendication 1, dans lequel la matière de base de l'élément glissant est réalisée en une matière à base d'aluminium.

4. Élément glissant selon la revendication 1, dans lequel la matière de base de l'élément glissant est réalisée en une matière à base de fer.

5. Élément glissant selon la revendication 1, dans lequel le creux minuscule s'étend dans une direction qui forme un angle prédéterminé avec une direction de glissement.

6. Élément glissant selon la revendication 1, dans lequel le creux minuscule s'étend dans une direction parallèle à une direction de glissement.

7. Élément glissant selon la revendication 1, dans lequel le creux minuscule s'étend dans des directions mutuellement perpendiculaires.

8. Élément glissant selon la revendication 1, dans lequel le rapport entre la largeur du creux minuscule et la longueur de la face de glissement le long d'une direction perpendiculaire à une direction d'extension du creux minuscule se situe dans une plage de 0,05 à 0,6.

9. Élément glissant selon la revendication 1, dans lequel une concavité extrêmement minuscule possédant un diamètre maximal de 3 µm ou moins est formée sur une face intérieure de chaque cavité minuscule.

10. Méthode pour fabriquer un élément glissant pour former une couche de transfert (104, 204, 304, 404) sur une face de glissement de l'élément glissant (101, 201, 301, 401),
la méthode comprenant l'étape consistant à former la couche de transfert en projetant, sur une matière de base de l'élément glissant, des particules de projection contenant au moins un composant sélectionné dans le groupe comprenant l'alumine, la silice, la mullite, l'oxyde de calcium, l'oxyde de magnésium et l'oxyde de fer, et en faisant à ce qu'un composant de chaque particule de projection adhère et se fonde dans la surface de la matière de base, dans laquelle,
dans l'étape consistant à former la couche de transfert, un grand nombre de cavités minuscules (105, 205, 305, 405) formées chacune par une partie d'une surface substantiellement sphérique sont fournies sur la face de glissement de l'élément glissant.

11. Méthode pour fabriquer un élément glissant selon la revendication 10, dans laquelle la particule de projection est de forme substantiellement sphérique et possède un diamètre de particule moyen se situant dans la plage de 3 µm à 200 µm.

12. Méthode pour fabriquer un élément glissant selon la revendication 10 ou11, dans laquelle des cendres volantes sont utilisées en tant que particules de projection.

13. Méthode pour fabriquer un élément glissant selon la revendication 10 ou 11, dans laquelle la méthode comprend en outre, avant l'étape consistant à former la couche de transfert, une étape de meulage pour former un creux minuscule sur une face de la matière de base destinée à être la face de glissement.

14. Méthode pour fabriquer un élément glissant selon la revendication 10 ou 11, dans laquelle la méthode comprend en outre, avant l'étape consistant à former la couche de transfert, une étape de meulage pour former un creux minuscule sur une face de la matière de base destinée à être la face de glissement, et dans laquelle le creux minuscule formé dans l'étape de meulage s'étend dans une direction qui forme un angle prédéterminé avec une direction de glissement.

15. Méthode pour fabriquer un élément glissant selon la revendication 10 ou 11, dans laquelle dans l'étape consistant à former la couche de transfert, une cavité minuscule est formée, dont le diamètre maximal à une ouverture de la face de glissement se situe dans une plage de 10 µm à 200 µm.

16. Méthode pour fabriquer un élément glissant selon la revendication 10 ou 11, dans laquelle dans l'étape consistant à former la couche de transfert, une concavité extrêmement minuscule possédant un diamètre maximal de 3 µm ou moins est formée sur une face intérieure d'une cavité minuscule.

17. Méthode pour fabriquer un élément glissant selon la revendication 10, dans laquelle la couche de transfert est formée par projection, sur la matière de base, d'une particule de projection mixte dans laquelle la particule de projection possédant un diamètre de particule de 1 µm ou moins est mélangée avec une microbille porteuse possédant une forme substantiellement sphérique et possédant un diamètre de particule moyen se situant dans la plage de 3 µm à 200 µm.

18. Méthode pour fabriquer un élément glissant selon la revendication 17, dans laquelle la particule de projection mixte est formée de manière à ce qu'un grand nombre de particules de projection soient attachées à une surface de la microbille porteuse.

19. Méthode pour fabriquer un élément glissant selon l'une des revendications 10 ou 11, dans laquelle l'un au moins de l'oxyde de calcium et de la chaux calcique est utilisé en tant que la particule de projection.
